# EUROPEAN PATENT SPECIFICATION

(11) **EP 4 660 817 B1**
(45) Date of publication and mention of the grant of the patent: **25.11.2026**
(21) Application number: 24837528.9
(22) Date of filing: 29.05.2024
(51) Int. Cl.: G06F 13/38, G06F 13/42, G06F 13/40

(54) **PROTOCOL CONTROLLER, PROTOCOL CONTROL METHOD, CHIPLET, SYSTEM ON CHIP, AND ELECRONIC DEVICE**
PROTOKOLLSTEUERUNG, PROTOKOLLSTEUERVERFAHREN, CHIPLET, SYSTEM AUF EINEM CHIP UND ELEKTRONISCHE VORRICHTUNG
DISPOSITIF DE COMMANDE DE PROTOCOLE, PROCÉDÉ DE COMMANDE DE PROTOCOLE, MICROPUCE, SYSTÈME SUR PUCE ET DISPOSITIF ÉLECTRONIQUE

(30) Priority: 03.11.2023 CN 202311459482
(43) Date of publication of application: 10.12.2025
(73) Proprietor: Hygon Information Technology Co., Ltd., Binhai New Area, Tianjin 300392 (CN)
(72) Inventor: XU, Xiangjun, Binhai New Area, Tianjin 300392 (CN); WEI, Jiaming, Binhai New Area, Tianjin 300392 (CN)
(74) Representative: Regimbeau
(86) International application number: PCT/CN2024/095960
(87) International publication number: WO 2025/091885

(56) References cited:
- CN-A- 112 817 905
- CN-A- 114 721 979
- CN-A- 116 881 188
- CN-A- 117 453 596
- US-A1- 2018 095 923
- US-A1- 2020 210 366
- US-A1- 2020 394 150
- US-A1- 2022 327 084
- US-A1- 2022 342 841
- US-B1- 11 488 935

## Description

### CROSS-REFERENCE TO RELATED APPLICATIONS

The present application is a national phase application of International Patent Application No. PCT/CN2024/095960, which claims the priority to Chinese Patent Application No. 202311459482.2, filed on November 3, 2023.

### TECHNICAL FIELD

Embodiments of the present disclosure relate to a protocol controller, a protocol control method, a chiplet, a system on chip, and an electronic device.

### BACKGROUND

A chiplet is a unit chip capable of realizing certain functionality, e.g., a processor chiplet (such as a CPU chiplet) for realizing data processing. A plurality of chiplets may be interconnected to form a chip, such as a system on chip (SOC).

A protocol controller is a component within a chiplet for managing and executing a communication protocol. Based on the requirement of a chiplet for interconnection with peripherals (i.e., peripheral devices) and other chiplets, the protocol controller within the chiplet may be classified as a peripheral protocol controller and an inter-chip interconnection protocol controller. The peripheral protocol controller is configured to manage and execute a peripheral protocol to enable interconnection between the chiplet and a peripheral. The inter-chip interconnection protocol controller is configured to manage and execute an inter-chip interconnection protocol to enable interconnection between the chiplet and other chiplets.

In this context, how to provide a protocol controller to reduce hardware resources occupied by the protocol controller has become a technical problem to be urgently solved by those skilled in the art.

US2020394150A1 relates to a link layer-PHY interface adapter. The adapter includes a first interface to couple to a particular device, where link layer data is to be communicated over the first interface, and a second interface to couple to a physical layer (PHY) device. The PHY device includes wires to implement a physical layer of a link, and the link couples the adapter to another adapter via the PHY device. The second interface includes a data channel to communicate the link layer data over the physical layer, and a sideband channel to communicate sideband messages between the adapter and the other adapter over the physical layer. The adapter is to implement a logical PHY for the link.

US2020210366A1 relates to flex bus protocol negotiation and enabling sequence. An apparatus provided by US2020210366A1 includes: a host device that includes a root complex, a link, and an interconnect protocol stack coupled to a bus link. The interconnect protocol stack can include multiplexing logic to select one of a Peripheral Component Interconnect Express (PCIe) upper layer mode, or an accelerator link protocol upper layer mode, the PCIe upper layer mode or the accelerator link protocol upper layer mode to communicate over the link, and physical layer logic to determine one or more low latency features associated with one or both of the PCIe upper layer mode or the accelerator link protocol upper layer mode.

US20180095923A1 relates to a link layer-physical layer interface adapter. The interface adapter according to US20180095923A1 is used to identify a first ready signal from a first link layer-to-physical layer (LL-PHY) interface of a first communication protocol indicating readiness of a physi-cal layer of the first protocol to accept link layer data. The interface adapter generates a second ready signal compatible with a second LL-PHY interface of a second communication protocol to cause link layer data to be sent from a link layer of the second communication protocol according to a predefined delay. A third ready signal is generated compatible with the first LL-PHY interface to indicate to the physical layer of the first communication protocol that the link layer data is to be sent. The interface adapter uses a shift register to cause the link layer data to be passed to the physical layer according to the predefined delay.

### SUMMARY

In view of the above, embodiments of the present disclosure provide a protocol controller, a protocol control method, a chiplet, a system on chip, and an electronic device. By supporting both the peripheral protocol and the inter-chip interconnection protocol with a single protocol controller, the need to separately implement a peripheral protocol controller and an interconnection protocol controller, which occupy significant hardware resources, is avoided, thereby reducing the hardware resources occupied by the protocol controller.

To achieve the above objectives, the embodiments of the present disclosure provide the following technical solutions.

In a first aspect, the embodiments of the present disclosure provide a protocol controller according to claim 1.

In a second aspect, the embodiments of the present disclosure provide a protocol control method according to claim 13.

In a third aspect, the embodiments of the present disclosure provide a chiplet, which includes the protocol controller according to the first aspect.

In a fourth aspect, the embodiments of the present disclosure provide a system on chip, which includes a plurality of interconnected chiplets, and the chiplets include the chiplet according to the first aspect.

In a fifth aspect, the embodiments of the present disclosure provide an electronic device, which includes the chiplet according to the first aspect, or the system on chip according to the fourth aspect.

The protocol controller provided in the embodiments of the present disclosure may be applied to a chiplet. The protocol controller may include a first bus interface connected with a system bus and a second bus interface connected with the system bus. Because the chiplet uses either the inter-chip interconnection protocol or the peripheral protocol at the same time, in the case where a first partial sub-protocol and a second partial sub-protocol of the peripheral protocol are configured to be implemented by different bus interfaces, the protocol controller provided in the embodiments of the present disclosure may implement the inter-chip interconnection protocol and the first partial sub-protocol of the peripheral protocol at the first bus interface and implement the second partial sub-protocol of the peripheral protocol at the second bus interface, so that the first bus interface of the protocol controller can be shared by the inter-chip interconnection protocol and the first partial sub-protocol of the peripheral protocol that the chiplet needs to support; thus, the hardware resources occupied by the protocol controller can be reduced. Moreover, the second partial sub-protocol needing to be configured separately from the first partial sub-protocol is implemented at the second bus interface of the protocol controller, so that the protocol controller of the chiplet can support both the peripheral protocol and the inter-chip interconnection protocol through two sets of interfaces, namely, the first bus interface and the second bus interface.

Therefore, the embodiments of the present disclosure support both the peripheral protocol and the inter-chip interconnection protocol through a single protocol controller in the chiplet, and one set of bus interfaces (i.e., the first bus interface) of the protocol controller is shared by both the inter-chip interconnection protocol and the first partial sub-protocol of the peripheral protocol, thereby enhancing the reusability of hardware resources. Accordingly, different from the way of separately implementing a peripheral protocol controller and an inter-chip interconnection protocol controller in the chiplet, the embodiments of the present disclosure may reduce hardware resources occupied by the protocol controller, thereby saving the hardware resources of the chiplet.

### BRIEF DESCRIPTION OF DRAWINGS

In order to more clearly illustrate the technical solutions in the embodiments of the present disclosure, the drawings to be used in the description of the embodiments will be briefly described below. Obviously, the drawings in the following description are only some embodiments recorded in the present disclosure. For those ordinarily skilled in the art, other drawings may be obtained based on these drawings without inventive work.
Fig. 1 A is a schematic diagram of an interconnection example of a chiplet with a peripheral and another chiplet;
Fig. 1B is a schematic diagram of another interconnection example of a chiplet with a peripheral and another chiplet;
Fig. 2A is a schematic diagram of a connection example of a protocol controller provided by the embodiments of the present disclosure;
Fig. 2B is a schematic diagram of another connection example of a protocol controller provided by the embodiments of the present disclosure;
Fig. 3 is a schematic diagram of an interconnection example of a chiplet provided by the embodiments of the present disclosure;
Fig. 4 is a schematic diagram of an example of a protocol controller provided by the embodiments of the present disclosure;
Fig. 5 is a schematic diagram of an example of a bus interface module provided by the embodiments of the present disclosure;
Fig. 6A is a schematic diagram of an example of a transport layer module provided by the embodiments of the present disclosure;
Fig. 6B is a schematic diagram of another example of a transport layer module provided by the embodiments of the present disclosure;
Fig. 6C is a schematic diagram of an interaction process example between a protocol controller and a system bus provided by the embodiments of the present disclosure;
Fig. 6D is a schematic diagram of another interaction process example between a protocol controller and a system bus provided by the embodiments of the present disclosure;
Fig. 7 is a schematic diagram of an example of a data link layer module provided by the embodiments of the present disclosure;
Fig. 8 is a schematic diagram of an example of a physical layer module provided by the embodiments of the present disclosure;
Fig. 9 is a schematic diagram of another example of a protocol controller provided by the embodiments of the present disclosure; and
Fig. 10 is a flowchart of a protocol control method provided by the embodiments of the present disclosure.

### DETAILED DESCRIPTION

The technical solutions in the embodiments of the present disclosure will be described in a clearly and fully understandable way in connection with the drawings related to the embodiments of the present disclosure. Apparently, the described embodiments are just a part but not all of the embodiments of the present disclosure. Based on the embodiments of the present disclosure, those ordinarily skilled in the art can acquire other embodiment(s), without any inventive work, which should be within the scope of the present disclosure.

Limited by the process technology and costs of chips, a plurality of chiplets may combined by an inter-chip interconnection technique into a chip system (e.g., a system on chip) to implement performance improvement and functionality addition of the chip; and the inter-chip interconnection technique may implement interconnection of the plurality of chiplets based on an inter-chip interconnection protocol.

Moreover, in order to enable interconnection of a chiplet such as a processor chiplet (e.g., a CPU chiplet) with a peripheral, the chiplet and the peripheral may be interconnected by a peripheral protocol. For example, with the increasing demand for computing power in a computer system, in order to mitigate the influence caused by the memory wall problem, peripheral protocols such as a Compute Express Link (CXL) protocol is proposed to improve data exchange efficiency between a chiplet such as a CPU chiplet and a peripheral. Therefore, the chiplet such as a CPU chiplet and the peripheral may be interconnected by the peripheral protocol such as the CXL protocol. It should be noted that the memory wall problem refers to a problem that the performance of the computer system cannot be effectively improved due to limitations such as memory bandwidth, time delay, or cache consistency when there is a need to access mass memory data. The occurrence of the memory wall problem is accompanied by the bottleneck in the memory bandwidth.

Therefore, the chiplet has the need for interconnection with the peripheral and another chiplet. When a chiplet is designed, it is necessary to enable the chiplet to support the peripheral protocol and the inter-chip interconnection protocol, so that the chiplet can be interconnected with the peripheral by the peripheral protocol and can be interconnected with another chiplet by the inter-chip interconnection protocol.

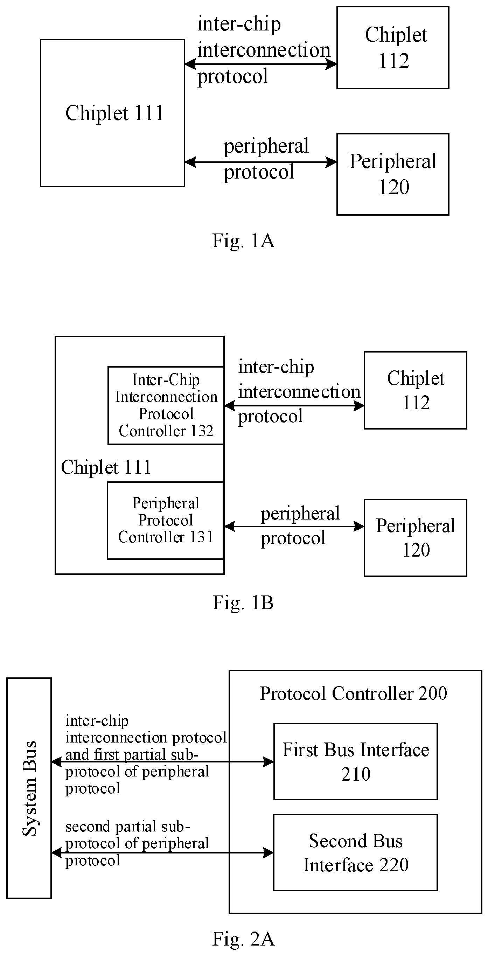

For ease of understanding, Fig. 1A exemplarily illustrates a diagram of an interconnection example of a chiplet with a peripheral and another chiplet. As shown in Fig. 1A, a chiplet 111 and a chiplet 112 may be interconnected by an inter-chip interconnection protocol, and the chiplet 111 and a peripheral 120 may be interconnected by a peripheral protocol.

The chiplet 111 and the chiplet 112 may be two chiplets in a chip such as System on Chip (SOC). For example, the chiplet 111 and the chiplet 112 are two processor chiplets in the SOC. The embodiments of the present disclosure have no limitation on the number of chiplets in the chip such as the SOC. The chiplet 111 and the chiplet 112 may be interconnected by the inter-chip interconnection protocol. The inter-chip interconnection protocol is a communication protocol for connecting different chiplets to implement high-speed data transmission and communication between different chiplets. The inter-chip interconnection protocol may include a three-layer protocol consisting of a transport layer, a data link layer, and a physical layer.

The peripheral 120 may be any of external devices such as a network device, an accelerator device, and a storage device, which are connected with the chiplet 111. The chiplet 111 and the peripheral 120 may be interconnected by a peripheral protocol. The peripheral protocol is a communication protocol used for connecting and controlling external devices or peripherals from the chiplet, such as the CXL protocol.

It should be noted that the CXL protocol is a high-performance open interconnection protocol which is intended to connect computing, storage, accelerating devices, and the like to support high-bandwidth and low-latency data transmission and resource sharing. It should be further noted that the peripheral protocol is not limited to the CXL protocol, and may also be the Cache Coherent Interconnect for Accelerators (CCIX) protocol, or other protocols for connecting a processor (e.g., a graphics processor) and an accelerating device to support high-performance computation and data transmission, etc.

In order to enable a chiplet to support the peripheral protocol and the inter-chip interconnection protocol, protocol controllers for supporting the peripheral protocol and the inter-chip interconnection protocol need to be separately implemented in the chiplet. For ease of understanding, Fig. 1B exemplarily illustrates a diagram of another interconnection example of a chiplet with a peripheral and another chiplet. As shown in Fig. 1A and Fig. 1B, a peripheral protocol controller 131 and an inter-chip interconnection protocol controller 132 are implemented in the chiplet 111. The chiplet 111 may use the peripheral protocol controller 131 to be interconnected with the peripheral 120 by the peripheral protocol; and the chiplet 111 may use the inter-chip interconnection protocol controller 132 to be interconnected with the chiplet 112 by the inter-chip interconnection protocol.

By implementing the peripheral protocol controller and the inter-chip interconnection protocol controller in the chiplet, the chiplet can select the protocol controller to be used according to an actual application scenario and thus be interconnected with the peripheral by the peripheral protocol, or interconnected with another chiplet by the inter-chip interconnection protocol, thereby meeting the requirements of the chiplet in various application scenarios.

However, the chiplet may not be interconnected with both the peripheral and another chiplet at the same time. That is, the chiplet is interconnected with the peripheral or another chiplet at the same time. In this case, the chiplet uses one of the peripheral protocol controller and the inter-chip interconnection protocol controller, and the other one not used needs to be turned off to reduce power consumption.

For example, in the application scenario in which the chiplet is interconnected with the peripheral, the chiplet may select to use the peripheral protocol controller to be interconnected with the peripheral by the peripheral protocol, and in order to reduce the power consumption, the chiplet may turn off the inter-chip interconnection protocol controller that is not used currently. For another example, in the application scenario in which the chiplet is interconnected with another chiplet, the chiplet may select to use the inter-chip interconnection protocol controller to be interconnected with another chiplet by the inter-chip interconnection protocol, and in order to reduce the power consumption, the chiplet may turn off the peripheral protocol controller that is not used currently.

Therefore, based on the mechanism that the chiplet might use either the inter-chip interconnection protocol or the peripheral protocol at the same time while one protocol is not used, in response to both the peripheral protocol controller and the inter-chip interconnection protocol controller being implemented in the chiplet, this may cause the following problems.

Because the chiplet might use one of the peripheral protocol controller and the inter-chip interconnection protocol controller at the same time and the other one not used needs to be turned off, in response to both the peripheral protocol controller and the inter-chip interconnection protocol controller being implemented in the chiplet, many hardware resources of the chiplet will be occupied, resulting in an increased area and an increased cost of the chiplet. In addition, an increase in the number of protocol controllers in the chiplet will cause an increase in design complexity of the system bus and an increase in occupied hardware resources, resulting in increased design complexity and an increased cost of the chiplet.

In addition, in the case where both the peripheral protocol controller and the inter-chip interconnection protocol controller are implemented in the chiplet, for the protocol controller needing to be turned off, in order to reduce the power consumption of the protocol controller which is turned off as much as possible, a complex low power design scheme needs to be adopted, which further increases the complexity of the chiplet design.

On this basis, the embodiments of the present disclosure provide an improved design scheme for the protocol controller. One protocol controller is designed in the chiplet to support both the peripheral protocol and the inter-chip interconnection protocol, thereby avoiding the problems caused by separately implementing the peripheral controller and the interconnection protocol controller in the chiplet. For example, occupancy of many hardware resources due to separate implementation of the peripheral controller and the interconnection protocol controller in the chiplet can be avoided. The hardware resources occupied by the protocol controller can be saved. The area of the chiplet can be reduced. The cost of the chip can be reduced, and the design difficulty of the chiplet can be reduced. Further, by performing low power control on the protocol needing to be turned off in one protocol controller, the complexity of a control logic can be simplified, and the complexity of the chiplet design can be further reduced.

Based on the above-mentioned idea, as an optional implementation, Fig. 2A exemplarily illustrates a diagram of a connection example of a protocol controller provided by the embodiments of the present disclosure. As shown in Fig. 2A, the chiplet may include a protocol controller 200. The protocol controller 200 may include a first bus interface 210 and a second bus interface 220. The first bus interface 210 and the second bus interface 220 are separately connected with a system bus. That is, the first bus interface 210 is connected with the system bus, and the second bus interface 220 is connected with the system bus.

It should be noted that the system bus may be a communication channel provided in a chip (e.g., SOC chip), which is configured to connect different functional modules of the chip and is a medium for realizing data transmission and coordinate operations between functional modules. As an optional implementation, the system bus may be an internal bus or a bus on chip of the SOC chip.

In the embodiments of the present disclosure, the first bus interface 210 and the second bus interface 220 are two sets of bus interfaces within the chiplet. The first bus interface 210 may implement an inter-chip interconnection protocol and a first partial sub-protocol of a peripheral protocol, to support the interface related functionality of the inter-chip interconnection protocol and support the interface related functionality of the first partial sub-protocol of the peripheral protocol.

In the embodiments of the present disclosure, the second bus interface 220 may implement a second partial sub-protocol of the peripheral protocol, to support the interface related functionality of the second partial sub-protocol of the peripheral protocol.

In the embodiments of the present disclosure, the first partial sub-protocol and the second partial sub-protocol of the peripheral protocol are configured to be implemented by different bus interfaces. That is, the peripheral protocol may be divided into the first partial sub-protocol and the second partial sub-protocol needing to be configured to different bus interfaces. Thus, the first partial sub-protocol and the second partial sub-protocol of the peripheral protocol can be implemented at different bus interfaces.

On this basis, because the chiplet might use either the inter-chip interconnection protocol or the peripheral protocol at the same time (i.e., in the case where the chiplet uses the peripheral protocol, the inter-chip interconnection protocol is not used, and in the case where the inter-chip interconnection protocol is used, the peripheral protocol is not used), in the case where the protocol controller of the chiplet is designed in the embodiments of the present disclosure, a set of bus interfaces (i.e., the first bus interface) of the chiplet may be configured to be shared by the inter-chip interconnection protocol and the first partial sub-protocol of the peripheral protocol. Thus, in the case where the chiplet supports the inter-chip interconnection protocol and the first partial sub-protocol of the peripheral protocol, multiplexing of the first bus interface by the inter-chip interconnection protocol and the first partial sub-protocol of the peripheral protocol is implemented, and the hardware resources occupied by the protocol controller are reduced.

In addition, in the case where the first bus interface implements the inter-chip interconnection protocol and the first partial sub-protocol of the peripheral protocol, the second partial sub-protocol of the peripheral protocol is implemented at a set of bus interfaces (i.e., the second bus interface) different from the first bus interface, so that the protocol controller of the chiplet can support the peripheral protocol and the inter-chip interconnection protocol through two bus interfaces (i.e., the first bus interface and the second bus interface).

The protocol controller provided in the embodiments of the present disclosure may be applied to a chiplet, and the protocol controller may include a first bus interface connected with a system bus and a second bus interface connected with the system bus. Because the chiplet uses either the inter-chip interconnection protocol or the peripheral protocol at the same time, in the case where a first partial sub-protocol and a second partial sub-protocol of the peripheral protocol are configured to be implemented by different bus interfaces, the protocol controller provided in the embodiments of the present disclosure may implement the inter-chip interconnection protocol and the first partial sub-protocol of the peripheral protocol at the first bus interface and implement the second partial sub-protocol of the peripheral protocol at the second bus interface, so that the first bus interface of the protocol controller can be shared by the inter-chip interconnection protocol and the first partial sub-protocol of the peripheral protocol that the chiplet needs to support, thus, the hardware resources occupied by the protocol controller can be reduced; moreover, the second partial sub-protocol needing to be configured separately from the first partial sub-protocol is implemented at the second bus interface of the protocol controller, so that the protocol controller of the chiplet can support the peripheral protocol and the inter-chip interconnection protocol through the first bus interface and the second bus interface.

Therefore, the embodiments of the present disclosure may support the peripheral protocol and the inter-chip interconnection protocol through one protocol controller within the chiplet, and one set of bus interfaces (i.e., the first bus interface) of the protocol controller can be shared by the inter-chip interconnection protocol and the first partial sub-protocol of the peripheral protocol, thereby improving the reusability of hardware resources. Accordingly, different from the way of separately implementing the peripheral protocol controller and the inter-chip interconnection protocol controller within the chiplet, the embodiments of the present disclosure may reduce hardware resources occupied by the protocol controller, thus saving the hardware resources of the chiplet.

In one implementation example, taking the case where the peripheral protocol is the CXL protocol as an example, the first partial sub-protocol of the peripheral protocol may include a memory and cache sub-protocol of the CXL protocol. Thus, the memory and cache sub-protocol of the CXL protocol and the inter-chip interconnection protocol can be implemented at the first bus interface of the protocol controller such that the first bus interface of the protocol controller is shared by the memory and cache sub-protocol of the CXL protocol and the inter-chip interconnection protocol. It should be noted that the memory and cache sub-protocol of the CXL protocol may be regarded as a sub-protocol related to a memory and a cache in the CXL protocol, such as CXL.MEM (memory) sub-protocol and CXL. CACHE (cache) sub-protocol of the CXL protocol, where MEM is short for MEMORY.

In one implementation example, taking the case where the peripheral protocol is the CXL protocol as an example, the second partial sub-protocol of the peripheral protocol may include an input/output sub-protocol of the CXL protocol. Thus, the input/output sub-protocol of the CXL protocol can be implemented at the second bus interface of the protocol controller. The input/output sub-protocol of the CXL protocol is, for example, CXL.IO (input/output) sub-protocol of the CXL protocol.

It should be noted that the CXL protocol may include CXL.IO sub-protocol, CXL.CACHE sub-protocol, and CXL.MEM sub-protocol. The CXL.IO sub-protocol is a sub-protocol of the CXL protocol that is configured to implement high-performance input and output communication and is the input/output sub-protocol of the CXL protocol. The CXL.CACHE sub-protocol is a sub-protocol of the CXL protocol that is configured to support high-performance caching and sharing of data and is the cache sub-protocol of the CXL protocol. The CXL.MEM sub-protocol is a sub-protocol of the CXL protocol that is configured to support high-performance memory access and memory sharing and is the memory sub-protocol of the CXL protocol. The CXL.CACHE sub-protocol and the CXL.MEM sub-protocol, as sub-protocols related to the memory and the cache in the CXL protocol, may be referred to as the memory and cache sub-protocol of the CXL protocol.

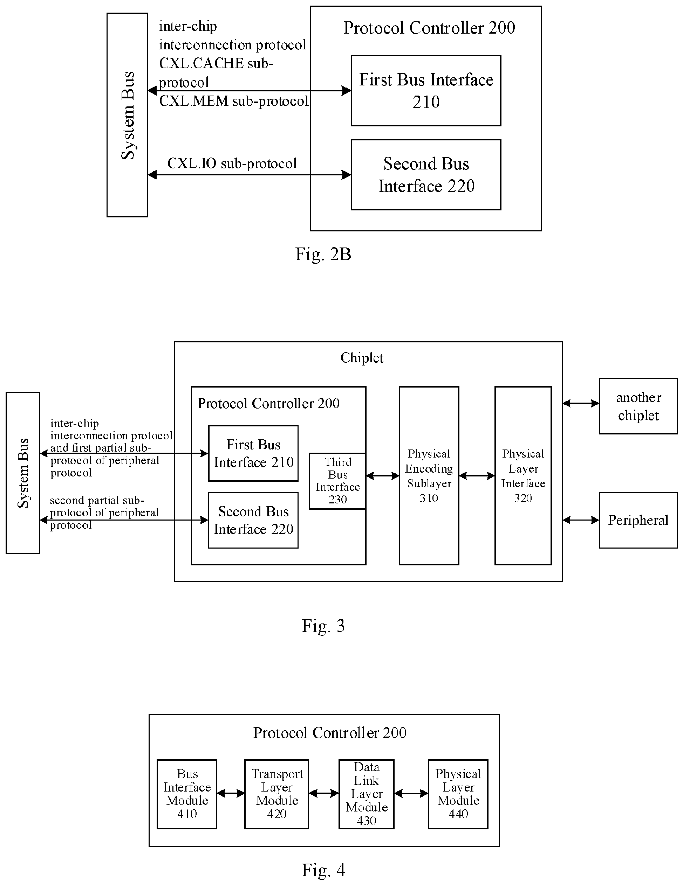

As an optional implementation, taking the case where the peripheral protocol is the CXL protocol as an example, Fig. 2B exemplarily illustrates a diagram of another connection example of a protocol controller provided by the embodiments of the present disclosure. As shown in Fig. 2A and Fig. 2B, the first bus interface 210 may implement the CXL.CACHE sub-protocol, the CXL.MEM sub-protocol, and the inter-chip interconnection protocol. Thus, the chiplet can be connected with the system bus through the first bus interface to implement the related functionality of the memory and cache of the CXL protocol and the related functionality of the inter-chip interconnection protocol. The second bus interface can implement the CXL.IO sub-protocol. Thus, the chiplet can be connected with the system bus through the second bus interface to implement the related functionality of the input and output of the CXL protocol.

In a further optional implementation, Fig. 3 exemplarily illustrates a diagram of an interconnection example of a chiplet provided by the embodiments of the present disclosure. As shown in Fig. 2A and Fig. 3, the chiplet may further include a physical encoding sublayer 310 connected with the protocol controller 200, and a physical layer interface 320 connected with the physical encoding sublayer 310. In addition, the protocol controller 200 may further include a third bus interface 230. The protocol controller 200 may be connected with the physical encoding sublayer 310 through the third bus interface 230.

It should be noted that in the chiplet, the physical layer (PHY) interface 320 is part of a physical layer of the chiplet and is configured to process physical layer connection of data transmission, e.g., transmit the data of the chiplet to a physical channel, and receive data from the physical channel and transmit the data into the chiplet. In one example, the physical layer interface may be, for example, a high-speed PHY interface configured to process physical layer connection of high-speed data transmission.

The physical encoding sublayer 310 may also be part of the physical layer of the chiplet and is configured to implement the functionality of the physical layer in the chiplet, such as data encoding, physical layer information addition and processing.

As an optional implementation, the protocol controller provided by the embodiments of the present disclosure may be connected with the system bus of the chip (e.g., SOC chip) and the physical encoding sublayer of the chiplet. For example, the protocol controller is connected between the system bus of the chip (e.g., SOC chip) and the physical encoding sublayer of the chiplet. The protocol controller is connected with the system bus through two sets of bus interfaces (i.e., the first bus interface and the second bus interface) to access the internal bus or the network on chip of the chip (e.g., SOC chip), and is connected with the physical encoding sublayer of the chiplet through one set of bus interfaces (i.e., the third bus interface) to be connected with other chiplets or peripherals through the physical encoding sublayer of the chiplet and the physical layer interface of the chiplet. That is, the chiplet is connected up to the system bus of the chip (e.g., SOC chip) through the bus interface of the protocol controller, and connected down to other chiplets or peripherals through the physical layer interface.

In an optional implementation, a protocol used by the system bus may be referred to as a system bus protocol. The system bus protocol may be a standard system bus protocol, e.g., an Advanced eXtensible Interface (AXI) protocol, or may be a customized system bus protocol. In an optional implementation, the third bus interface of the protocol controller may be connected with the physical encoding sublayer through a physical layer bus. The physical layer bus may adopt a standard bus protocol such as a PHY Interface for PCI Express (PIPE) protocol, or may adopt a customized bus protocol. For example, taking the case where the peripheral protocol is the CXL protocol as an example, the physical layer adopts the interface standard of a Peripheral Component Interconnect Express (PCIE) bus, and based on the CXL protocol and the PCIE protocol, the physical layer bus of the third bus interface of the protocol controller that is connected with the physical encoding sublayer may be implemented based on the PIPE protocol.

As an optional implementation, a protocol may have a plurality of layers such as a transport layer, a data link layer, and a physical layer, where the physical layer of the protocol, as an underlying layer, may be responsible for defining electrical characteristics, transmission media and connection interfaces, ensuring correct connection of a device, and performing data transmission; the data link layer is responsible for managing data transmission, e.g., data grouping, error detection and correction; and the transport layer is responsible for controlling data transmission to ensure reliable data transmission. On this basis, Fig. 4 exemplarily illustrates a diagram of an example of a protocol controller provided by the embodiments of the present disclosure. As shown in Fig. 3 and Fig. 4, the protocol controller 200 in the chiplet may include a bus interface module 410, a transport layer module 420, a data link layer module 430, and a physical layer module 440.

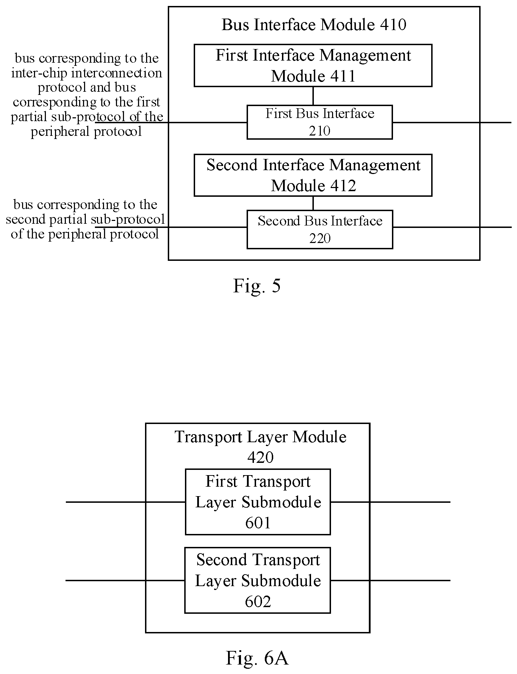

The bus interface module 410 can implement connection management of a bus interface of the protocol controller 200 that is connected with a system bus. Based on the protocol controller being provided with the first bus interface and the second bus interface separately connected with the system bus, the bus interface module may separately implement the connection management of the first bus interface and the second bus interface. As an optional implementation, Fig. 5 exemplarily illustrates a diagram of an example of a bus interface module provided by the embodiments of the present disclosure. As shown in Fig. 5, the bus interface module 410 may include a first interface management module 411 and a second interface management module 412.

The first interface management module 411 is configured to manage connection between the first bus interface 210 and the system bus. That is, in the case where the first bus interface 210 implements the inter-chip interconnection protocol and the first partial sub-protocol of the peripheral protocol, the connection management between the first bus interface 210 and the system bus may be implemented by the first interface management module 411.

It should be noted that the first bus interface 210 corresponds to a bus corresponding to the inter-chip interconnection protocol and a bus corresponding to the first partial sub-protocol of the peripheral protocol. Therefore, the first interface management module 411 performing the connection management between the first bus interface 210 and the system bus may be regarded as: the first interface management module 411 performing the connection management between the bus corresponding to the inter-chip interconnection protocol as well as the bus corresponding to the first partial sub-protocol of the peripheral protocol and the system bus. In one implementation example, taking the case where the peripheral protocol is the CXL protocol and the first partial sub-protocol of the peripheral protocol is the CXL.CACHE sub-protocol and the CXL.MEM sub-protocol as an example, the first interface management module 411 may implement the connection management between a bus corresponding to the CXL.CACHE sub-protocol and the CXL.MEM sub-protocol and the system bus, and the connection management between the bus corresponding to the inter-chip interconnection protocol and the system bus.

The second interface management module 412 is configured to manage connection between the second bus interface 220 and the system bus. That is, in the case where the second bus interface 220 implements the second partial sub-protocol of the peripheral protocol, the connection management between the second bus interface 220 and the system bus may be implemented by the second interface management module 412. The second bus interface 220 corresponds to a bus corresponding to the second partial sub-protocol of the peripheral protocol. Therefore, the second interface management module 412 performing the connection management between the second bus interface 220 and the system bus may be regarded as: the second interface management module 412 performing the connection management between the bus corresponding to the second partial sub-protocol of the peripheral protocol and the system bus. In one implementation example, taking the case where the peripheral protocol is the CXL protocol and the second partial sub-protocol of the peripheral protocol is the CXL.IO sub-protocol as an example, the second interface management module 412 may implement the connection management between a bus corresponding to the CXL.IO sub-protocol and the system bus.

In an optional implementation, an interface management module in the bus interface module may manage connection and disconnection between a corresponding bus interface and the system bus by monitoring the internal state of the protocol controller and according to the internal state of the protocol controller and a state of the corresponding bus interface at the system bus, thereby realizing the connection management of the corresponding bus interface. That is, the connection or disconnection between the first bus interface and the system bus, and the connection or disconnection between the second bus interface and the system bus are managed by the corresponding interface management modules based on the internal states of the protocol controller for the protocols and the states of the corresponding bus interfaces at the system bus.

As an optional implementation, the internal states of the protocol controller for the protocols are, for example, processing states of an internal module of the protocol controller for the protocols, such as the processing states of submodules related to the protocols in the transport layer module 420 and the data link layer module 430 of the protocol controller.

In an optional implementation, the first interface management module may manage connection and disconnection between the first bus interface and the system bus based on the internal states of the protocol controller regarding the inter-chip interconnection protocol and the first partial sub-protocol of the peripheral protocol, and the state of the first bus interface.

In one implementation example, taking the connection management of the first bus interface as an example, based on the first bus interface implementing the inter-chip interconnection protocol and the first partial sub-protocol of the peripheral protocol, in response to the processing states of the internal modules of the protocol controller regarding the inter-chip interconnection protocol and the first partial sub-protocol of the peripheral protocol being all idle states (e.g., the submodules related to the inter-chip interconnection protocol and the first partial sub-protocol of the peripheral protocol in the transport layer module 420 and the data link layer module 430 of the protocol controller are all in the idle state), and the first bus interface corresponding to the inter-chip interconnection protocol and the first partial sub-protocol of the peripheral protocol at the system bus being also in the idle state, the first bus interface may be disconnected from the system bus; and in response to any internal module of the protocol controller having a data processing operation regarding the inter-chip interconnection protocol or the first partial sub-protocol of the peripheral protocol (e.g., any submodule related to the inter-chip interconnection protocol or the first partial sub-protocol of the peripheral protocol in the transport layer module 420 and the data link layer module 430 of the protocol controller has the data processing operation), the connection between the first bus interface and the system bus is restored.

Taking the case where the peripheral protocol is the CXL protocol and the first partial sub-protocol of the peripheral protocol is the CXL.CACHE sub-protocol and the CXL.MEM sub-protocol as an example, in response to the submodules related to the CXL.CACHE sub-protocol, the CXL.MEM sub-protocol and the inter-chip interconnection protocol in the transport layer module 420 and the data link layer module 430 being statistically determined to be all in the idle state and the first bus interface corresponding to the CXL.CACHE sub-protocol, the CXL.MEM sub-protocol and the inter-chip interconnection protocol at the system bus being also in the idle state, the first interface management module may disconnect the first bus interface from the system bus; and in response to any submodule related to the CXL.CACHE sub-protocol, the CXL.MEM sub-protocol and the inter-chip interconnection protocol in the transport layer module 420 and the data link layer module 430 being statistically determined to have the data processing operation, the connection between the first bus interface and the system bus may be restored.

In an optional implementation, the second interface management module may manage connection and disconnection between the second bus interface and the system bus based on the internal state of the protocol controller regarding the second partial sub-protocol of the peripheral protocol and the state of the second bus interface.

In one implementation example, taking the connection management of the second bus interface as an example, based on the second bus interface implementing the second partial sub-protocol of the peripheral protocol, in response to the processing states of the internal modules of the protocol controller regarding the second partial sub-protocol of the peripheral protocol being all the idle state (e.g., the submodules related to the second partial sub-protocol of the peripheral protocol in the transport layer module 420 and the data link layer module 430 of the protocol controller are all in the idle state) and the second bus interface corresponding to the second partial sub-protocol of the peripheral protocol at the system bus being also in the idle state, the second interface management module may disconnect the second bus interface from the system bus; and in response to any internal module of the protocol controller having a data processing operation regarding the second partial sub-protocol of the peripheral protocol (e.g., any submodule related to the second partial sub-protocol of the peripheral protocol in the transport layer module 420 and the data link layer module 430 of the protocol controller has the data processing operation), the second interface management module may restore the connection between the second bus interface and the system bus.

Taking the case where the second partial sub-protocol of the peripheral protocol is the CXL.IO sub-protocol as an example, in response to the interface management module statistically determining that the submodules related to the CXL.IO sub-protocol in the transport layer module 420 and the data link layer module 430 are all in the idle state and the second bus interface corresponding to the CXL.IO sub-protocol at the system bus is also in the idle state, the second bus interface may be disconnected from the system bus; and in response to any submodule related to the CXL.IO sub-protocol in the transport layer module 420 and the data link layer module 430 having the data processing operation, the second interface management module may restore the connection between the second bus interface and the system bus.

It should be noted that the interface management modules may respectively implement the connection management between the first bus interface and the system bus and the connection management between the second bus interface and the system bus by hardware monitoring and analyzing the internal states of the protocol controller regarding the protocols and the states of the corresponding bus interfaces at the system bus. The embodiments of the present disclosure have no limitation on the hardware implementations of the interface management module monitoring and analyzing the internal states of the protocol controller regarding the protocols and the states of the corresponding bus interfaces at the system bus.

Referring back to Fig. 4, the transport layer module 420 is responsible for the data transmission control of the protocol controller. Based on the protocol controller needing to support the inter-chip interconnection protocol and the peripheral protocol, and being provided with the first bus interface for implementing the inter-chip interconnection protocol and the first partial sub-protocol of the peripheral protocol and the second bus interface for implementing the second partial sub-protocol of the peripheral protocol, the transport layer module 420 may implement the data transmission control of the inter-chip interconnection protocol and the first partial sub-protocol of the peripheral protocol and implement the data transmission control of the second partial sub-protocol of the peripheral protocol. That is, in the embodiments of the present disclosure, the transport layer design of the inter-chip interconnection protocol and the first partial sub-protocol of the peripheral protocol (e.g., the CXL.CACHE sub-protocol and the CXL.MEM sub-protocol) and the transport layer design of the second partial sub-protocol of the peripheral protocol (e.g., the CXL.IO sub-protocol) may be implemented at the transport layer module 420.

In an optional implementation, the transport layer module 420 may be connected with the system bus through a bus interface of the protocol controller with the system bus. That is, the transport layer module 420 is connected with the system bus and the data link layer module 430. In an optional implementation in which the transport layer module is connected with the system bus, a transport layer interface of the transport layer module 420 is connected with the system bus through the bus interface of the protocol controller with the system bus. For example, the transport layer interface of the transport layer module 420 is connected with the system bus separately through the first bus interface and the second bus interface.

As an optional implementation, Fig. 6A exemplarily illustrates a diagram of an example of a transport layer module provided by the embodiments of the present disclosure. As shown in Fig. 6A, the transport layer module 420 is provided with two transport layer submodules, referred to as a first transport layer submodule 601 and a second transport layer submodule 602; the first transport layer submodule 601 is configured to implement data transmission control of the inter-chip interconnection protocol and the first partial sub-protocol of the peripheral protocol; and the second transport layer submodule 602 is configured to implement data transmission control of the second partial sub-protocol of the peripheral protocol. For example, the first transport layer submodule may implement the data transmission control of the inter-chip interconnection protocol, the CXL.CACHE sub-protocol, and the CXL.MEM sub-protocol, and the second transport layer submodule may implement the data transmission control of the CXL.IO sub-protocol.

In an optional implementation, to reduce the occupied hardware resources of the transport layer module, the transport layer module may have a plurality of submodules shared by two transport layer submodules (the first transport layer submodule and the second transport layer submodule). The plurality of submodules may be part of submodules within the transport layer module. That is, part of modules within the transport layer may be shared by the two transport layer submodules (the first transport layer submodule and the second transport layer submodule) of the transport layer module 420.

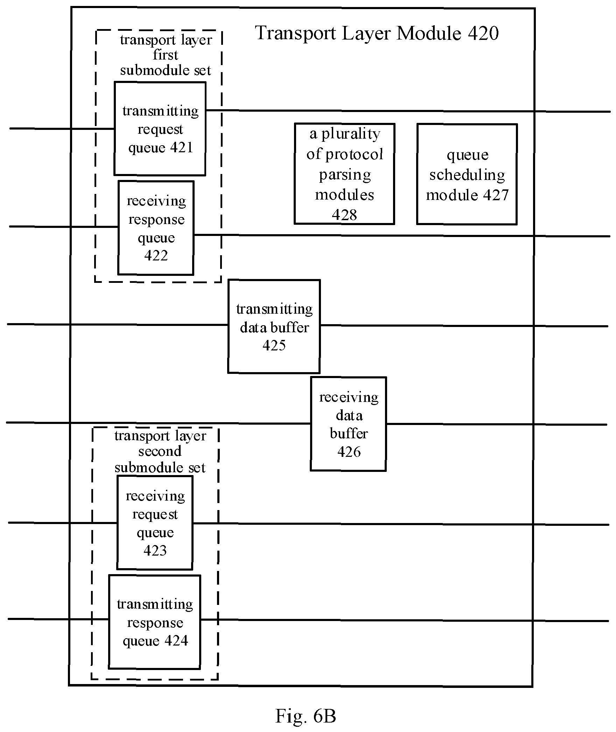

In an optional implementation, Fig. 6B exemplarily illustrates a diagram of another example of a transport layer module provided by the embodiments of the present disclosure. As shown in Fig. 6B, a plurality of submodules shared by the first transport layer submodule and the second transport layer submodule within the transport layer module 420 may be divided at least into a transport layer first submodule set and a transport layer second submodule set.

The transport layer first submodule set is configured to process a request from a peripheral or another chiplet that needs to be sent to the system bus, and a response from the system bus that needs to be sent to the peripheral or another chiplet.

The transport layer second submodule set is configured to process a request from the system bus that needs to be sent to a peripheral or another chiplet, and a response from the peripheral or another chiplet that needs to be sent to the system bus.

That is, the transport layer first submodule set includes a plurality of submodules that are configured to process the request from the peripheral or another chiplet that needs to be sent to the system bus and the response from the system bus that needs to be sent to the peripheral or another chiplet, and may be shared by the first transport layer submodule and the second transport layer submodule. The transport layer second submodule set includes a plurality of submodules that are configured to process the request from the system bus that needs to be sent to the peripheral or another chiplet and the response from the peripheral or another chiplet that needs to be sent to the system bus, and may be shared by the first transport layer submodule and the second transport layer submodule.

In a further optional implementation, as shown in Fig. 6B, the submodules within the transport layer module 420 may include a transmitting request queue 421, a receiving response queue 422, a receiving request queue 423, a transmitting response queue 424, a transmitting data buffer 425, a receiving data buffer 426, a queue scheduling module 427, and a plurality of protocol parsing modules 428.

The transmitting request queue 421 or the receiving response queue 422 may be regarded as an optional form of the transport layer first submodule set; and the receiving request queue 423 or the transmitting response queue 424 may be regarded as an optional form of the transport layer second submodule set.

Further, in addition to the transport layer first submodule set (e.g., the transmitting request queue 421 and the receiving response queue 422) and the transport layer second submodule set (e.g., the receiving request queue 423 and the transmitting response queue 424), the submodules shared by the first transport layer submodule and the second transport layer submodule within the transport layer module 420 may further include the transmitting data buffer 425, the receiving data buffer 426, and the queue scheduling module 427.

As an optional implementation, in the present implementation example, the transmitting request queue 421, the receiving response queue 422, the receiving request queue 423, the transmitting response queue 424, the transmitting data buffer 425, the receiving data buffer 426, and the queue scheduling module 427 are a plurality of submodules shared by the first transport layer submodule and the second transport layer submodule within the transport layer module 420. Thus, the plurality of submodules may be shared by the first transport layer submodule and the second transport layer submodule, to implement sharing of the hardware resources of the inter-chip interconnection protocol and the first partial sub-protocol and the second partial sub-protocol of the peripheral protocol at the transport layer, thereby reducing the occupied hardware resources.

The total number of the plurality of protocol parsing modules 428 corresponds to the total number of protocols that require independent configuration of protocol parsing modules, and one protocol parsing module is configured to parse requests and responses of the corresponding protocol. **In** one implementation example, the plurality of protocol parsing modules may include a protocol parsing module corresponding to the inter-chip interconnection protocol, a protocol parsing module corresponding to the first partial sub-protocol of the peripheral protocol, and a protocol parsing module corresponding to the second partial sub-protocol of the peripheral protocol; the protocol parsing module corresponding to the inter-chip interconnection protocol is configured to parse requests and responses of the inter-chip interconnection protocol; the protocol parsing module corresponding to the first partial sub-protocol of the peripheral protocol is configured to parse requests and responses of the first partial sub-protocol; and the protocol parsing module corresponding to the second partial sub-protocol of the peripheral protocol is configured to parse requests and responses of the second partial sub-protocol.

Taking the case where the peripheral protocol is the CXL protocol as an example, the protocol parsing module corresponding to the first partial sub-protocol of the peripheral protocol may include a protocol parsing module corresponding to the sub-protocol CXL.CACHE and a protocol parsing module corresponding to the sub-protocol CXL.MEM. The protocol parsing module corresponding to the second partial sub-protocol of the peripheral protocol may include a protocol parsing module corresponding to the CXL.IO sub-protocol. That is, the CXL.IO sub-protocol, the CXL.CACHE sub-protocol, the CXL.MEM sub-protocol, and the inter-chip interconnection protocol need to independently implement the protocol parsing modules to parse the requests and responses of the respective protocols.

In one implementation example, in response to the protocol controller being used as the inter-chip interconnection protocol controller, requests transmitted by the protocol controller are all inter-chip interconnection requests, and responses transmitted by the protocol controller are all inter-chip interconnection responses. In this case, the protocol parsing module corresponding to the inter-chip interconnection protocol may be used to parse the requests and responses.

In response to the protocol controller being used as a CXL protocol controller, the request transmitted by the protocol controller may be a request using the CXL.IO sub-protocol, or a request using the CXL.CACHE sub-protocol, or a request using the CXL.MEM sub-protocol; and the response transmitted by the protocol controller may be a response using the CXL.IO sub-protocol, or a response using the CXL.CACHE sub-protocol, or a response using the CXL.MEM sub-protocol. In this case, a protocol parsing module needs to be selected according to the specific situation to parse requests and responses. For example, the requests and responses of data reading and writing are mainly implemented by the CXL.CACHE sub-protocol and the CXL.MEM sub-protocol (i.e., the memory and cache sub-protocol of the CXL protocol), and in the case where the requests and responses of data reading and writing of the CXL protocol are involved, the requests and responses may be parsed by the protocol parsing module corresponding to the CXL.CACHE sub-protocol and the protocol parsing module corresponding to the CXL.MEM sub-protocol. The requests and responses of data reading and writing related to cache may be parsed by the protocol parsing module corresponding to the CXL.CACHE sub-protocol; and the requests and responses of data reading and writing related to memory may be parsed by the protocol parsing module corresponding to the CXL.MEM sub-protocol. For another example, the input/output configuration management of the CXL protocol is mainly implemented by the CXL.IO sub-protocol, and in the case where the requests and responses of the input/output configuration management of the CXL protocol are involved, the requests and responses may be parsed by the protocol parsing module corresponding to the CXL.IO sub-protocol.

As an optional implementation, based on the first transport layer submodule implementing the data transmission control of the inter-chip interconnection protocol and the first partial sub-protocol of the peripheral protocol, the protocol parsing module corresponding to the inter-chip interconnection protocol and the protocol parsing module corresponding to the first partial sub-protocol of the peripheral protocol may be provided in the first transport layer submodule; and based on the second transport layer submodule implementing the data transmission control of the second partial sub-protocol of the peripheral protocol, the protocol parsing module corresponding to the second partial sub-protocol of the peripheral protocol may be provided in the second transport layer submodule.

In an optional implementation, the transmitting request queue, the receiving response queue, the receiving request queue, the transmitting response queue, the transmitting data buffer, the receiving data buffer, and the queue scheduling module in the transport layer module may be set as shared resources to be shared by the first transport layer submodule and the second transport layer submodule. The embodiments of the present disclosure have no limitation on positions where the above-mentioned shared submodules are provided, and these submodules may be provided in any one of the first transport layer submodule and the second transport layer submodule, or may be provided in a shared resource area set within the transport layer module.

The submodules shared within the transport layer module are described below.

As shown in Fig. 6B, the transmitting request queue 421 is configured at least to store a request to be sent of the chiplet. The request to be sent of the chiplet may be a request to be sent by the chiplet to the system bus. The request to be sent may be from a peripheral or another chiplet connected with the chiplet, and needs to be sent to the system bus. The request to be sent may be request information for requesting reading and writing of data, requesting an interruption, and the like. In one example, in the case where the chiplet uses the peripheral protocol (such as the CXL protocol), the request to be sent may be from the peripheral connected with the chiplet (e.g., CPU chiplet), and the chiplet needs to send the request to be sent to the system bus. In another example, in the case where the chiplet uses the inter-chip interconnection protocol, the request to be sent may be from another chiplet (e.g., another CPU chiplet) connected with the chiplet (e.g., CPU chiplet), and the chiplet needs to send the request to be sent to the system bus.

In an optional implementation, as shown in Fig. 3 and Fig. 4, the request to be sent from the peripheral or another chiplet may be transmitted to the protocol controller through the physical layer interface and the physical encoding sublayer of the chiplet, and transmitted to the transport layer module through the physical layer module and the data link layer module within the protocol controller.

Therefore, according to the embodiments of the present disclosure, the requests to be sent from the peripheral and another chiplet may be stored in the transmitting requests queue. That is, the request to be sent corresponding to the peripheral protocol (such as the CXL protocol) and the request to be sent corresponding to the inter-chip interconnection protocol may be stored in the transmitting request queue. That is, the transmitting request queue of the transport layer may be shared by the peripheral protocol (such as the CXL protocol) and the inter-chip interconnection protocol. Thus, the hardware resources occupied in the case where the request to be sent corresponding to the peripheral protocol (such as the CXL protocol) and the inter-chip interconnection protocol are stored at the transport layer are reduced.

As an optional implementation, when the data link layer module 430 obtains the request to be sent from another chiplet or the peripheral by parsing, the request to be sent may be stored in the transmitting request queue 421. Thus, the request to be sent can be stored in the transmitting request queue 421.

The receiving response queue 422 is configured at least to store a response to be received correspondingly marked for a request to be sent that has been sent in the transmitting request queue, where the request to be sent that has been sent refers to a request (the request needs to be sent to the system bus) that has been sent in the transmitting request queue, and the request to be sent that has been sent is dequeued and cleared from the transmitting request queue. As an optional implementation, in response to a data transmitting condition for transmitting data to the system bus being met, the request to be sent in the transmitting request queue 421 may be sent to the system bus. For example, in response to that the bus interface used by the protocol corresponding to the request to be sent is in a state of being connected with the system bus and the system bus has the capability of receiving a request (e.g., the system bus has a space for receiving a request), it may be regarded as meeting the data transmitting condition for transmitting data to the system bus. Thus, the transport layer module may dequeue and clear the request to be sent from the transmitting request queue 421 and send the dequeued request to be sent to the bus system. Meanwhile, a response to be received is marked for the request to be sent (i.e., the request to be sent that has been sent) to the system bus in the receiving response queue 422.

In one implementation example, in response to the request to be sent being the request to be sent corresponding to the peripheral protocol (such as the CXL protocol), and the data transmitting condition for transmitting data to the system bus being met, the request to be sent corresponding to the peripheral protocol (such as the CXL protocol) may be dequeued from the transmitting request queue and sent to the system bus. Meanwhile, the response to be received correspondingly marked for the request to be sent corresponding to the peripheral protocol (such as the CXL protocol) may be stored in the receiving response queue. In response to the request to be sent being the request to be sent corresponding to the inter-chip interconnection protocol, and the data transmitting condition for transmitting data to the system bus being met, the request to be sent corresponding to the inter-chip interconnection protocol may be dequeued from the transmitting request queue and sent to the system bus. Meanwhile, the response to be received correspondingly marked for the request to be sent corresponding to the inter-chip interconnection protocol may be stored in the receiving response queue. That is, the response to be received correspondingly marked for the request to be sent corresponding to the peripheral protocol (such as the CXL protocol) that is sent to the system bus and the response to be received correspondingly marked for the request to be sent corresponding to the inter-chip interconnection protocol that is sent to the system bus may both be stored in the receiving response queue. Thus, the receiving response queue of the transport layer may be shared by the peripheral protocol (such as the CXL protocol) and the inter-chip interconnection protocol, and the occupied hardware resources can be reduced.

It should be noted that when the request to be sent corresponding to the inter-chip interconnection protocol is sent to the system bus, the request to be sent may be transmitted to the first bus interface connected with the system bus through the transport layer interface of the transport layer module, to be transmitted to the system bus through the first bus interface. When the request to be sent corresponding to the first partial sub-protocol of the peripheral protocol (such as the requests to be sent corresponding to the CXL. CACHE sub-protocol and the CXL.MEM sub-protocol) is sent to the system bus, the request to be sent may be transmitted to the first bus interface connected with the system bus through the transport layer interface, to be transmitted to the system bus through the first bus interface. When the request to be sent corresponding to the second partial sub-protocol of the peripheral protocol (such as the request to be sent corresponding to the CXL.IO sub-protocol) is sent to the system bus, the request to be sent may be transmitted to the second bus interface connected with the system bus through the transport layer interface, to be transmitted to the system bus through the second bus interface.

In a further optional implementation, in response to the transport layer module receiving a response returned by the system bus (for ease of description, the response returned by the system bus may be referred to as a first response), the transport layer module may compare a request that the first response of the system bus is directed at with a request to be sent that a response to be received stored in the receiving response queue is directed at. In response to the two requests being consistent, the first response of the system bus may be stored to the receiving response queue; and in response to the two requests are inconsistent, the first response of the system bus is discarded and an error is reported. It should be noted that in response to the two requests being consistent, it indicates that the first response is a response made by the system bus regarding the request to be sent from the peripheral or another chiplet. Therefore, the first response and data corresponding to the first response need to be fed back to the peripheral or another chiplet. In this case, the transport layer module may store the first response to the receiving response queue, and in response to a data transmitting condition of transmitting data to the data link layer being met, the first response and the data corresponding to the first response are sent to the data link layer module and then fed back to the peripheral or another chiplet.

Therefore, in a further optional implementation, the receiving response queue may further store the first response of the system bus, and the request that the stored first response of the system bus is directed at is consistent with the request to be sent that the response to be received saved in the receiving response queue is directed at.

In one implementation example, a response to be received may carry a tag of a corresponding request to be sent, and the first response of the system bus may also carry a tag of a request directed at. Thus, according to the embodiments of the present disclosure, whether the tag carried by the response to be received is consistent with the tag carried by the first response of the system bus may be determined to determine whether the request that the first response of the system bus is directed at is consistent with the request to be sent that the response to be received is directed at. It should be noted that the embodiments of the present disclosure may assign a unique tag (such as a tag number) to each request to distinguish between different requests.

It should be further noted that the request that the first response of the system bus is directed at might be the request to be sent corresponding to the peripheral protocol (such as the CXL protocol), or might be the request to be sent corresponding to the inter-chip interconnection protocol. Responses corresponding to requests to be sent of different protocols may be transmitted to the transport layer module through the bus interfaces corresponding to the protocols. For example, in response to the first response of the system bus being directed at a request of the inter-chip interconnection protocol, the first response of the system bus is transmitted to the transport layer module through the system bus, the first bus interface of the protocol controller, and the transport layer interface. In response to the first response of the system bus being directed at a request of the first partial sub-protocol of the peripheral protocol (such as the CXL.CACHE sub-protocol and the CXL.MEM sub-protocol), the first response of the system bus is transmitted to the transport layer module through the system bus, the first bus interface of the protocol controller, and the transport layer interface. In response to the first response of the system bus being directed at a request of the second partial sub-protocol of the peripheral protocol (such as the CXL.IO sub-protocol), the first response of the system bus is transmitted to the transport layer module through the system bus, the second bus interface of the protocol controller, and the transport layer interface.

In a further optional implementation, in response to the data transmitting condition for transmitting data to the data link layer being met, the first response is dequeued and cleared from the receiving response queue, and the first response and the data corresponding to the first response are sent to the data link layer module and then transmitted to another chiplet or the peripheral. In one example, in response to the data transmitting condition for transmitting data to the data link layer being met, the first response in the receiving response queue and the data corresponding to the first response (the data corresponding to the first response may be stored in the receiving data buffer) may be transmitted to the physical encoding sublayer of the chiplet through the data link layer module and the physical layer module of the protocol controller and then transmitted to the physical layer interface of the chiplet, and thus transmitted to another chiplet or the peripheral through the physical layer interface of the chiplet.

As an optional implementation, meeting the data transmitting condition for transmitting data to the data link layer may be, for example, the data link layer module and the physical layer module of the protocol controller are in a connected state, and the bandwidth between the data link layer module and the physical layer module supports transmission of desired data (e.g., the bandwidth supports the transmission of the first response and the data corresponding to the first response).

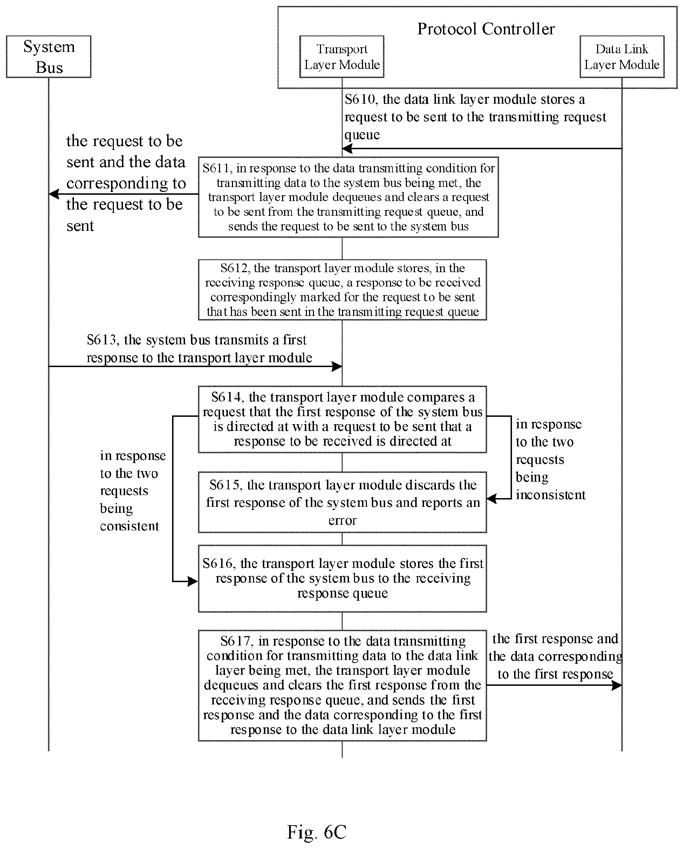

For ease of understanding of the processing process of the transport layer module of the protocol controller transmitting a request to the system bus and receiving a response from the system bus, as an optional implementation, Fig. 6C exemplarily illustrates a diagram of an interaction process example between a protocol controller and a system bus provided by the embodiments of the present disclosure. For the content of an optional implementation of the interaction process described below, a reference may be made to the description of the corresponding part of the above. With reference to Fig. 6C, the interaction process may include the followings steps.

In step S610, the data link layer module stores a request to be sent to the transmitting request queue.

In an optional implementation, the data link layer module obtains a request to be sent from the peripheral or another chiplet by parsing, and may store the request to be sent to the transmitting request queue of the transport layer module.

In step S611, in response to the data transmitting condition for transmitting data to the system bus being met, the transport layer module dequeues and clears a request to be sent from the transmitting request queue, and sends the request to be sent and the data corresponding to the request to be sent to the system bus.

In step S612, the transport layer module stores, in the receiving response queue, a response to be received correspondingly marked for the request to be sent that has been sent in the transmitting request queue.

In response to the data transmitting condition for transmitting data to the system bus being met, the transport layer module may synchronously perform step S611 and step S612.

In step S613, the system bus transmits a first response to the transport layer module.

Based on a protocol corresponding to the first response of the system bus, the first response of the system bus may be transmitted to the transport layer interface through the bus interface of the corresponding protocol of the protocol controller and thus enter into the transport layer module.

In step S614, the transport layer module compares a request that the first response of the system bus is directed at with a request to be sent that a response to be received is directed at.

In step S615, in response to the two requests being inconsistent, the transport layer module discards the first response of the system bus and reports an error.

In an optional implementation, the transport layer module may report error information through an interruption and state register. Optionally, part of the error information may be synchronously transmitted to the peripheral or another chiplet through the data link layer.

In step S616, in response to the two requests being consistent, the transport layer module stores the first response of the system bus to the receiving response queue.

In step S617, in response to the data transmitting condition for transmitting data to the data link layer being met, the transport layer module dequeues and clears the first response from the receiving response queue, and sends the first response and the data corresponding to the first response to the data link layer module.

Step S617 is performed after step S616.

The requests and responses described above may be parsed at the transport layer module. Based on a protocol used by a request and a response, the transport layer module may parse the request and the response using a protocol parsing module corresponding to the protocol. For the description of a specific optional implementation, a reference may be made to the foregoing description, which will not be repeated here.

Referring back to Fig. 6B, the receiving request queue 423 is configured at least to store a receiving request of the chiplet. The receiving request of the chiplet may be a request sent by the system bus and received by the chiplet. The receiving request may be from the system bus, and needs to be sent to the peripheral or another chiplet connected with the chiplet. The receiving request may be request information for requesting reading and writing of data, requesting an interruption, and the like. That is, receiving requests received by the chiplet from the system bus and needing to be sent to the peripheral or another chiplet may all be stored in the receiving request queue. That is, the receiving request queue of the transport layer may be shared by the peripheral protocol (such as the CXL protocol) and the inter-chip interconnection protocol. Thus, the occupied hardware resources can be reduced.

In one implementation example, in response to the receiving request sent by the system bus being a receiving request corresponding to the inter-chip interconnection protocol or a receiving request corresponding to the first partial sub-protocol of the peripheral protocol (such as a receiving request corresponding to the CXL.CACHE sub-protocol or the CXL.MEM sub-protocol), the receiving request sent by the system bus may be transmitted to the transport layer module through the first bus interface and the transport layer interface, and stored to the receiving request queue. In response to the receiving request sent by the system bus being a receiving request corresponding to the second partial sub-protocol of the peripheral protocol (such as a receiving request corresponding to the CXL.IO sub-protocol), the receiving request from the system bus may be transmitted to the transport layer module through the second bus interface and the transport layer interface, and stored to the receiving request queue.

The transmitting response queue 424 is configured at least to store a response to be received correspondingly marked for a receiving request that has been sent from the chiplet, and the receiving request that has been sent from the chiplet is dequeued and cleared from the receiving request queue. As an optional implementation, in response to the data transmitting condition for transmitting data to the data link layer being met, the receiving request stored in the receiving request queue 423 is dequeued and cleared, and data corresponding to the receiving request and the receiving request may be sent to the data link layer module, reach the physical encoding sublayer of the chiplet through the data link layer module and the physical layer module, and thus be transmitted to the peripheral or another chiplet through the physical layer interface of the chiplet. Meanwhile, the receiving request that has been sent in the receiving request queue may be marked with a response to be received, and the response to be received correspondingly marked for the receiving request that has been sent may be stored to the transmitting response queue.

In one implementation example, in response to the receiving request being a receiving request corresponding to the peripheral protocol (such as the CXL protocol), and the data transmitting condition for transmitting data to the data link layer being met, the receiving request corresponding to the peripheral protocol (such as the CXL protocol) may be dequeued and cleared from the receiving request queue, and the receiving request and data corresponding to the receiving request (the data corresponding to the receiving request may be stored in the receiving data buffer) may be sent to the data link layer module. Meanwhile, the transmitting response queue may store a response to be received correspondingly marked for the receiving request corresponding to the peripheral protocol (such as the CXL protocol) that has been sent. In response to the receiving request being a receiving request corresponding to the inter-chip interconnection protocol, and the data transmitting condition for transmitting data to the data link layer being met, the receiving request corresponding to the inter-chip interconnection protocol may be dequeued and cleared from the receiving request queue, and the receiving request and data corresponding to the receiving request may be sent to the data link layer module. Meanwhile, the transmitting response queue may store a response to be received correspondingly marked for the receiving request corresponding to the inter-chip interconnection protocol that has been sent. That is, the response to be received correspondingly marked for the receiving request corresponding to the peripheral protocol (such as the CXL protocol) that has been sent and the response to be received correspondingly marked for the receiving request corresponding to the inter-chip interconnection protocol that has been sent may both be stored in the transmitting response queue. Thus, the transmitting response queue of the transport layer may be shared, and the occupied hardware resources can be reduced.

In an optional implementation, because the receiving request and the data corresponding to the receiving data are transmitted to the physical layer (the physical encoding sublayer and the physical layer interface) of the chiplet through the data link layer module and the physical layer module, meeting the data transmitting condition for transmitting data to the data link layer corresponding to the receiving request may be regarded as: the data link layer module and the physical layer module being in the connected state, and bandwidths of the data link layer module and the physical layer module support the transmission of the receiving request and the data corresponding to the receiving request.

In a further optional implementation, a peripheral or another chiplet may feed back a response to the chiplet (for ease of description, the response fed back by the peripheral or another chiplets may be referred to as a second response). The second response may be parsed by the data link layer module of the protocol controller, and when the second response fed back by the peripheral or another chiplet is parsed by the data link layer module, the second response is transmitted to the transport layer module. Thus, the transport layer module may compare a request that the second response is directed at with a receiving request that a response to be received stored in the transmitting response queue is directed at. In response to the two requests being consistent, the second response may be stored to the transmitting response queue; and in response to the two requests being inconsistent, the second response is discarded and an error is reported. It should be noted that in response to the two requests being consistent, it indicates that the second response is a response made by the peripheral or another chiplet regarding the receiving request from the system bus. Therefore, the second response and data corresponding to the second response need to be fed back to the system bus. In this case, the transport layer module may store the second response to the transmitting response queue, and in response to the data transmitting condition for transmitting data to the system bus being met, the second response and the data corresponding to the second response are fed back to the system bus.

Therefore, in a further optional implementation, the transmitting response queue may be further configured to store the second response of the peripheral or another chiplet, and a request that the stored second response is directed at is consistent with a receiving request that a response to be received stored in the transmitting response queue is directed at.

In a further optional implementation, in response to the data transmitting condition for transmitting data to the system bus being met, the second response may be dequeued and cleared from the transmitting response queue. Thus, the second response and the data corresponding to the second response may be sent to the system bus. In one implementation example, in response to the protocol corresponding to the second response being the inter-chip interconnection protocol, the second response and the data corresponding to the second response may be transmitted to the system bus through the transport layer interface and the first bus interface. In response to the protocol corresponding to the second response being the first partial sub-protocol of the peripheral protocol (such as the CXL.CACHE sub-protocol and the CXL.MEM sub-protocol), the second response and the data corresponding to the second response may be transmitted to the system bus through the transport layer interface and the first bus interface. In response to the protocol corresponding to the second response being the second partial sub-protocol of the peripheral protocol (such as the CXL.IO sub-protocol), the second response and the data corresponding to the second response may be transmitted to the system bus through the transport layer interface and the second bus interface.

In an optional implementation, based on the second response and the data corresponding to the second response needing to be sent to the system bus through the transport layer interface, meeting the data transmitting condition for transmitting data to the system bus corresponding to the second response may be, for example, the bus interface corresponding to the protocol of the second response and the system bus being in the connected state and the system bus having space for receiving the response and data.

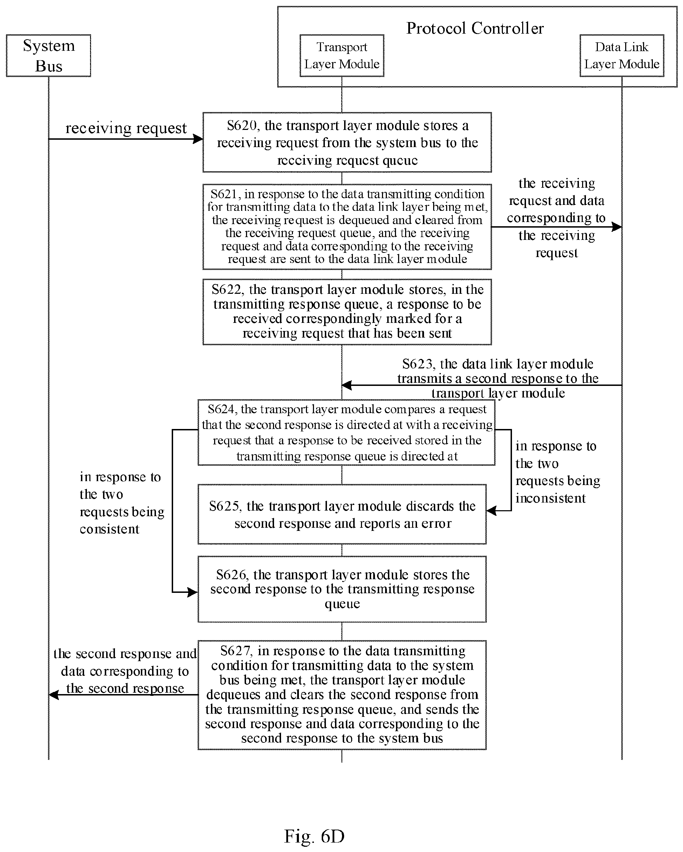

For ease of understanding of a processing process of the system bus transmitting a request to the transport layer module of the protocol controller and the transport layer module feeding back a response to the system bus, as an optional implementation, Fig. 6D exemplarily illustrates a diagram of another interaction process example of a protocol controller and a system bus provided by the embodiments of the present disclosure. For the content of an optional implementation of the interaction process described below, a reference may be made to the description of the corresponding part of the above. With reference to Fig. 6D, the interaction process may include the following steps.

In step S620, the transport layer module stores a receiving request from the system bus to the receiving request queue.

Based on a protocol corresponding to the receiving request, the receiving request may be transmitted to the transport layer interface through the bus interface of the corresponding protocol of the protocol controller and thus enter into the transport layer module.

In step S621, in response to the data transmitting condition for transmitting data to the data link layer being met, the receiving request is dequeued and cleared from the receiving request queue, and the receiving request and data corresponding to the receiving request are sent to the data link layer module.

In step S622, the transport layer module stores, in the transmitting response queue, a response to be received correspondingly marked for a receiving request that has been sent.

In response to the data transmitting condition for transmitting data to the data link layer being met, the transport layer module may synchronously perform step S621 and step S622.

In step S623, the data link layer module transmits a second response to the transport layer module.

The second response is from a peripheral or another chiplet and is a response sent by the peripheral or another chiplet, and is transmitted to the transport layer module through the data link layer module of the protocol controller of the chiplet.

In step S624, the transport layer module compares a request that the second response is directed at with a receiving request that a response to be received stored in the transmitting response queue is directed at.

In an optional implementation, whether a tag carried by the second response is consistent with a tag carried by a response to be received stored in the transmitting response queue is determined.

In step S625, in response to the two tags being inconsistent, the transport layer module discards the second response and reports an error.

In an optional implementation, the transport layer module may report error information through an interruption and state register. Optionally, part of the error information may be synchronously transmitted to the peripheral or another chiplet through the data link layer.

In step S626, in response to the two tags being consistent, the transport layer module stores the second response to the transmitting response queue.

In step S627, in response to the data transmitting condition for transmitting data to the system bus being met, the transport layer module dequeues and clears the second response from the transmitting response queue, and sends the second response and data corresponding to the second response to the system bus.

Based on a protocol corresponding to the second response, the second response and the data corresponding to the second response may be transmitted to the system bus through the transport layer interface and the bus interface of the corresponding protocol of the protocol controller.

Referring back to Fig. 6B, the transmitting data buffer 425 is configured at least to cache data corresponding to a request to be sent in the transmitting request queue 421 and cache data corresponding to the second response in the transmitting response queue. That is, a request to be sent from a peripheral or another chiplet is stored in the transmitting request queue, and data corresponding to the request to be sent is stored in the transmitting data buffer. Thus, when the data corresponding to the request to be sent need to be sent to the system bus, the data may be acquired from the transmitting data buffer and sent. Meanwhile, the second response (from the system bus) needing to be fed back to the peripheral or another chiplet is stored in the transmitting response queue, and the data corresponding to the second response is stored in the transmitting data buffer. Thus, when the data corresponding to the second response need to be fed back to the peripheral or another chiplet, the data may be acquired from the transmitting data buffert and sent.

According to the embodiments of the present disclosure, the data corresponding to the request to be sent from the peripheral or another chiplet and the data corresponding to the second response needing to be fed back to the peripheral or another chiplet may be stored in the transmitting data buffer. Therefore, the transmitting data buffer may be shared by the data corresponding to the request to be sent from the peripheral or another chiplet and the data corresponding to the second response needing to be fed back to the peripheral or another chiplet, and no limitation is imposed on the protocol (no limitation is imposed on the peripheral protocol or the inter-chip interconnection protocol), and the hardware resources occupied by the transmitting data buffer can be reduced.

The receiving data buffer 426 is configured at least to store data corresponding to a receiving request in the receiving request queue and cache data corresponding to a first response in the receiving response queue. That is, a receiving request from the system bus is stored in the receiving request queue, and data corresponding to the receiving request is stored in the receiving data buffer. Thus, when the data corresponding to the receiving request need to be sent to a peripheral or another chiplet, the data may be acquired from the receiving data buffer and sent. Meanwhile, the first response (from the peripheral or another chiplet) needing to be fed back to the system bus is stored in the receiving response queue, the data corresponding to the first response is stored in the receiving data buffer. Thus, when the data corresponding to the first response need to be fed back to the system bus, the data may be acquired from the receiving data buffer and sent.

According to the embodiments of the present disclosure, the data corresponding to the receiving request from the system bus and the data corresponding to the first response needing to be fed back to the system bus may be stored in the receiving data buffer. Therefore, the receiving data buffer may be shared by the data corresponding to the receiving request from the system bus and the data corresponding to the first response needing to be fed back to the system bus, and no limitation is imposed on the protocol (no limitation is imposed on the peripheral protocol or the inter-chip interconnection protocol), and the hardware resources occupied by the receiving data buffer can be reduced.

The queue scheduling module 427 is configured at least to arbitrate and schedule enqueuing processing and dequeuing processing of a request to be sent in the transmitting request queue, a first response in the receiving response queue, a receiving request in the receiving request queue, and a second response in the transmitting response queue, where the enqueuing processing refers to storing a request in the queue, and the dequeuing processing refers to extracting a request from the queue. The queue scheduling module 427 may implement arbitration and scheduling based on at least one of mechanisms such as priorities of requests and responses, a sequence requirement of protocols, and a letter of credit. The embodiments of the present disclosure have no limitation on the arbitration and scheduling mechanism, and the arbitration and scheduling mechanism may be set according to an actual situation. In one example, according to the embodiments of the present disclosure, the arbitration and scheduling mechanism of the queue scheduling module 427 may be set as configurable. For example, the arbitration and scheduling mechanism of the queue scheduling module is configured and defined by a configuration register. Thus, the priorities of the requests and the responses defined by arbitration and scheduling may be changed by the configuration register. Thus, configurable arbitration and scheduling are performed based on information such as the address, the priority, and the type of the request. According to the embodiments of the present disclosure, the configuration register is employed such that the arbitration and scheduling mechanism is configurable. The queue scheduling module may be shared to support arbitration and scheduling of requests and responses of the peripheral protocol (such as the CXL protocol) and the inter-chip interconnection protocol. Thus, the occupied hardware resources can be reduced.

It should be noted that the form of a response involved in the embodiments of the present disclosure may correspond to the form of a request. For example, in response to a request to be sent being a read request, the corresponding first response may be a read response; and in response to the request to be sent being a write request, the corresponding first response may be a write response. This may be the same for a receiving request and the second response. It should be noted that data corresponding to the read response may be construed as data needing to be read, and the read response may carry state information that the read response involves; and data corresponding to the write response may be construed as data needing to be written, and the write response may carry a processing state of the write request that the write response involves.

The embodiments of the present disclosure may implement the transmitting request queue, the receiving response queue, the receiving request queue, the transmitting response queue, the transmitting data buffer, the receiving data buffer, and the queue scheduling module at the transport layer module of the protocol controller, and these submodules may be shared by two transport layer submodules (the first transport layer submodule and the second transport layer submodule) provided in the transport layer module, to implement processing on requests and responses of the peripheral protocol (such as the CXL protocol) between the system bus and a peripheral, and processing on requests and responses of the inter-chip interconnection protocol between the system bus and another chiplet. Thus, on the basis of these submodules being shared by the peripheral protocol and the inter-chip interconnection protocol, the hardware resources occupied by the transport layer module of the protocol controller can be reduced.

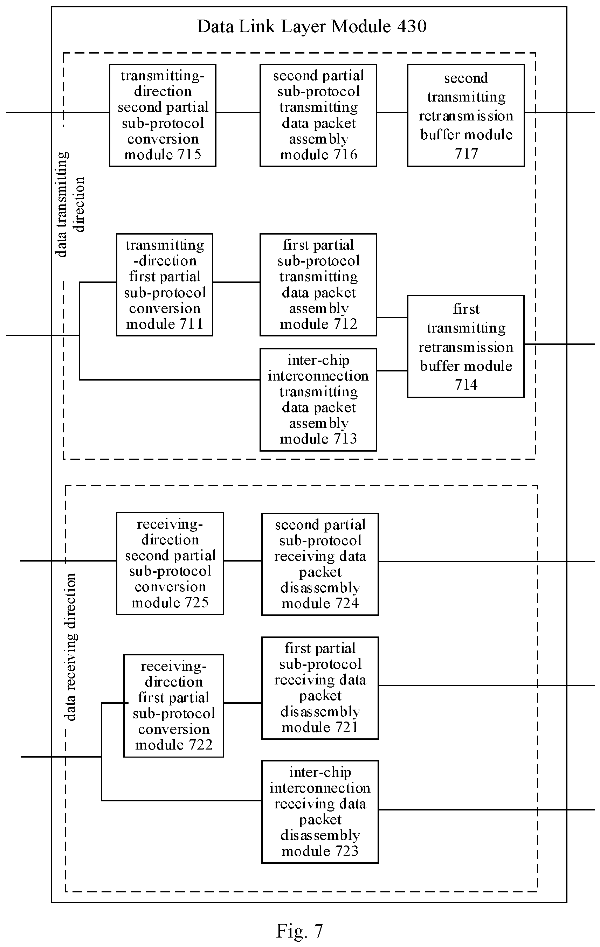

As an optional implementation, for the data link layer module provided by the embodiments of the present disclosure, Fig. 7 exemplarily illustrates a diagram of an example of a data link layer module provided by the embodiments of the present disclosure. As shown in Fig. 4 and Fig. 7, viewed from a data transmitting direction of the data link layer module 430, the data link layer module 430 may include a transmitting-direction first partial sub-protocol conversion module 711, a first partial sub-protocol transmitting data packet assembly module 712, an inter-chip interconnection transmitting data packet assembly module 713, a first transmitting retransmission buffer module 714, a transmitting-direction second partial sub-protocol conversion module 715, a second partial sub-protocol transmitting data packet assembly module 716, and a second transmitting retransmission buffer module 717.

The data transmitting direction of the data link layer module 430 may be a direction in which the data link layer module 430 receives data sent by the transport layer module 420 and sends data to the physical layer module 440; and the data sent by the transport layer module 420 to the data link layer module 430 is from the system bus, and the data sent by the data link layer module 430 to the physical layer module 440 need to be transmitted to a peripheral or another chiplet.

Viewed from a data receiving direction of the data link layer 430, the data link layer module 430 may include a first partial sub-protocol receiving data packet disassembly module 721, a receiving-direction first partial sub-protocol conversion module 722, an inter-chip interconnection receiving data packet disassembly module 723, a second partial sub-protocol receiving data packet disassembly module 724, and a receiving-direction second partial sub-protocol conversion module 725.

The data receiving direction of the data link layer 430 may be a direction in which the data link layer 430 receives data sent by the physical layer module 440 and transmits data to the transport layer module 420. The data sent by the physical layer module 440 to the data link layer module 430 is from a peripheral or another chiplet, and the data transmitted by the data link layer module 430 to the transport layer module 420 need to be transmitted to the system bus.

It should be noted that the protocol conversion modules of the data link layer module that are involved in the data transmitting direction and the data receiving direction are mainly responsible for conversion between the system bus protocol (e.g., the AXI protocol) and the peripheral protocol (e.g., the CXL protocol), and involve conversion from the system bus protocol to the peripheral protocol in the data transmitting direction of the data link layer module, and conversion from the peripheral protocol to the system bus protocol in the data receiving direction of the data link layer module. It should be noted that the inter-chip interconnection does not require protocol conversion, and therefore, no protocol conversion module may be provided for inter-chip interconnection in the data link layer module.

In an optional implementation, protocol conversion modules need to be implemented in the data transmitting direction and the data receiving direction of the data link layer for the first partial sub-protocol (e.g., the CXL.CACHE sub-protocol and the CXL.MEM sub-protocol) and the second partial sub-protocol (e.g., the CXL.IO sub-protocol) of the peripheral protocol, respectively. That is, the transmitting-direction first partial sub-protocol conversion module 711 needs to be implemented in the data transmitting direction for the first partial sub-protocol; the transmitting-direction second partial sub-protocol conversion module 715 needs to be implemented in the data transmitting direction for the second partial sub-protocol; the receiving-direction first partial sub-protocol conversion module 722 needs to be implemented in the data receiving direction for the first partial sub-protocol; and the receiving-direction second partial sub-protocol conversion module 725 needs to be implemented in the data receiving direction for the second partial sub-protocol.

In an optional implementation, the transmitting-direction first partial sub-protocol conversion module 711 is configured to convert a request or a response and/or data in the data transmitting direction of the data link layer module (corresponding to a request or a response and/or data transmitted by the transport layer module) from the system bus protocol (e.g., the AXI protocol) to the first partial sub-protocol (e.g., the CXL.CACHE sub-protocol and the CXL.MEM sub-protocol) of the peripheral protocol.

The transmitting-direction second partial sub-protocol conversion module 715 is configured to convert a request or a response and/or data in the data transmitting direction of the data link layer module (corresponding to a request or a response and/or data transmitted by the transport layer module) from the system bus protocol (e.g., the AXI protocol) to the second partial sub-protocol (e.g., the CXL.IO sub-protocol) of the peripheral protocol.

In an optional implementation, the receiving-direction first partial sub-protocol conversion module 722 is connected with the first partial sub-protocol receiving data packet disassembly module 721, and is configured at least to convert a data packet parsed by the first partial sub-protocol receiving data packet disassembly module 721 from the first partial sub-protocol of the peripheral protocol to the system bus protocol.

In an optional implementation, the receiving-direction second partial sub-protocol conversion module 725 is connected with the second partial sub-protocol receiving data packet disassembly module 724, and is configured at least to convert a data packet parsed by the second partial sub-protocol receiving data packet disassembly module 724 from the second partial sub-protocol of the peripheral protocol to the system bus protocol.

The transmitting data packet assembly modules of the data link layer module that are involved in the data transmitting direction are mainly responsible for assembling, according to a corresponding protocol, a corresponding request or response and/or data in the data transmitting direction of the data link layer (corresponding to a request or a response and/or data transmitted by the transport layer module) into a data packet matching the corresponding protocol; and the transmitting data packet assembly modules need to be implemented in the data transmitting direction of the data link layer for the inter-chip interconnection protocol, and the first partial sub-protocol (e.g., the CXL.CACHE sub-protocol and the CXL.MEM sub-protocol) and the second partial sub-protocol (e.g., the CXL.IO sub-protocol) of the peripheral protocol, respectively. That is, the inter-chip interconnection transmitting data packet assembly module 713 needs to be implemented in the data transmitting direction for the inter-chip interconnection protocol; the first partial sub-protocol transmitting data packet assembly module 712 needs to be implemented in the data transmitting direction for the first partial sub-protocol; and the second partial sub-protocol transmitting data packet assembly module 716 needs to be implemented in the data transmitting direction for the second partial sub-protocol.

In an optional implementation, the inter-chip interconnection transmitting data packet assembly module 713 may be configured to assemble, according to the inter-chip interconnection protocol, the request or the response and/or the data transmitted by the transport layer module into a data packet matching the inter-chip interconnection protocol.

In an optional implementation, the first partial sub-protocol transmitting data packet assembly module 712 is connected with the transmitting-direction first partial sub-protocol conversion module 711, and may be configured to assemble the request or the response and/or the data for which the protocol is converted by the transmitting-direction first partial sub-protocol conversion module 711 into a data packet matching the first partial sub-protocol.

In an optional implementation, the second partial sub-protocol transmitting data packet assembly module 716 is connected with the transmitting-direction second partial sub-protocol conversion module 715, and may be configured to assemble the request or the response and/or the data for which the protocol is converted by the transmitting-direction second partial sub-protocol conversion module 715 into a data packet matching the second partial sub-protocol.

In one example, taking the case where the length of a data packet of the CXL protocol is a preset length as an example, the first partial sub-protocol transmitting data packet assembly module and the second partial sub-protocol transmitting data packet assembly module may sequentially assemble requests or responses and/or data for which the protocols are converted by the corresponding protocol conversion modules into data packets of the preset length. Thus, a plurality of requests or responses may be added with a field such as a data packet type and thus assembled into a data packet of the preset length. Of course, the embodiments of the present disclosure may also support assembling pure data and a field such as a data packet type into a data packet of the preset length. In an optional example, the present length is, for example, 68 Bytes.

In an optional implementation, a transmitting retransmission buffer module may be provided in the protocol controller. The transmitting retransmission buffer module may store a data packet sent to the chiplet or a peripheral, and the data packet is a data packet assembled by the data link layer module; in response to the data packet being received correctly, the correctly received data packet is deleted from the transmitting retransmission buffer module; and in response to the data packet being not received correctly, the incorrectly received data packet is retrieved from the transmitting retransmission buffer module for retransmission.

The transmitting retransmission buffer module provided in the protocol controller may be, for example, the transmitting retransmission buffer module of the data link layer module involved in the data transmitting direction, and is configured to cache a data packet assembled by a corresponding transmitting data packet assembly module and provide a retransmission mechanism for the data packet. For example, the transmitting retransmission buffer module provided in the protocol controller may include a first transmitting retransmission buffer module 714 and a second transmitting retransmission buffer module 717.

The first transmitting retransmission buffer module 714 is correspondingly connected with the first partial sub-protocol transmitting data packet assembly module 712 and the inter-chip interconnection transmitting data packet assembly module 713, and may store the data packets assembled by the first partial sub-protocol transmitting data packet assembly module 712 and the inter-chip interconnection transmitting data packet assembly module 713; in response to the data packet assembled by the first partial sub-protocol transmitting data packet assembly module 712 being received correctly by the peripheral, or the data packet assembled by the inter-chip interconnection transmitting data packet assembly module 713 being received correctly by another chiplet, the correctly received data packet is deleted from the first transmitting retransmission buffer module 714; and in response to the data packet being not received correctly, the incorrectly received data packet is retrieved from the first transmitting retransmission buffer module 714 for retransmission.

Correspondingly, the second transmitting retransmission buffer module 717 is correspondingly connected with the second partial sub-protocol transmitting data packet assembly module 716, and thus may store the data packet assembled by the second partial sub-protocol transmitting data packet assembly module 716; in response to the data packet assembled by the second partial sub-protocol transmitting data packet assembly module 716 being received correctly by the peripheral, the correctly received data packet is deleted from the second transmitting retransmission buffer module 717; and in response to the data packet being not received correctly, the incorrectly received data packet is retrieved from the second transmitting retransmission buffer module 717 for retransmission.

As an optional implementation, a data packet receiving terminal may check a data packet by inspecting a check field in the data packet. In response to the check being successful, it may be considered that the data packet is received correctly. In this case, the data packet receiving terminal may send notification information to a data packet transmitting terminal to inform that the data packet is received correctly. In response to that the data packet transmitting terminal does not receive the notification information indicating that the data packet is received correctly after the time expires, or receives notification information indicating that the data packet is not received correctly, it may be considered that the data packet is not received correctly. It should be noted that for the protocol controller of the chiplet, in response to data being sent to a peripheral, the data packet receiving terminal may be the protocol controller (e.g., CXL protocol controller) of the peripheral; and in response to data being sent to another chiplet, the data packet receiving terminal may be the protocol controller of another chiplet (the part of the protocol controller that supports inter-chip interconnection).

In an optional alternative implementation, the transmitting retransmission buffer module may be not provided in the data link layer module, and instead provided in the physical layer module 440 of the protocol controller. For example, in the embodiments of the present disclosure, the position where the transmitting retransmission buffer module is provided may be determined based on the version of the peripheral protocol. In response to the version of the peripheral protocol being a first version, the transmitting retransmission buffer module may be provided in the data link layer module; in response to the version of the peripheral protocol being a second version, the transmitting retransmission buffer module may be provided in the physical layer module; and the second version is higher than the first version. For example, the first version is CXL1.1 protocol version or CXL2.0 protocol version, and the second version is CXL3.0 protocol version.

Referring back to Fig. 7, the receiving data packet disassembly modules of the data link layer module that are involved in the data receiving direction are mainly responsible for parsing data packets transmitted by the physical layer module according to corresponding protocols. The receiving data packet disassembly modules need to be implemented in the data receiving direction of the data link layer for the inter-chip interconnection protocol, and the first partial sub-protocol (e.g., the CXL.CACHE sub-protocol and the CXL.MEM sub-protocol) and the second partial sub-protocol (e.g., the CXL.IO sub-protocol) of the peripheral protocol, respectively. That is, the inter-chip interconnection receiving data packet disassembly module 723 needs to be implemented in the data receiving direction for the inter-chip interconnection protocol; the first partial sub-protocol receiving data packet disassembly module 721 needs to be implemented in the data receiving direction for the first partial sub-protocol; and the second partial sub-protocol receiving data packet disassembly module 724 needs to be implemented in the data receiving direction for the second partial sub-protocol.

In an optional implementation, the inter-chip interconnection receiving data packet disassembly module 723 may be configured to parse a data packet transmitted by the physical layer module from another chiplet according to the inter-chip interconnection protocol.

In an optional implementation, the first partial sub-protocol receiving data packet disassembly module 721 may be configured to parse a data packet related to the first partial sub-protocol transmitted by the physical layer module from the peripheral according to the first partial sub-protocol of the peripheral protocol.

In an optional implementation, the second partial sub-protocol receiving data packet disassembly module 724 may be configured to parse a data packet related to the second partial sub-protocol transmitted by the physical layer module from the peripheral according to the second partial sub-protocol of the peripheral protocol.

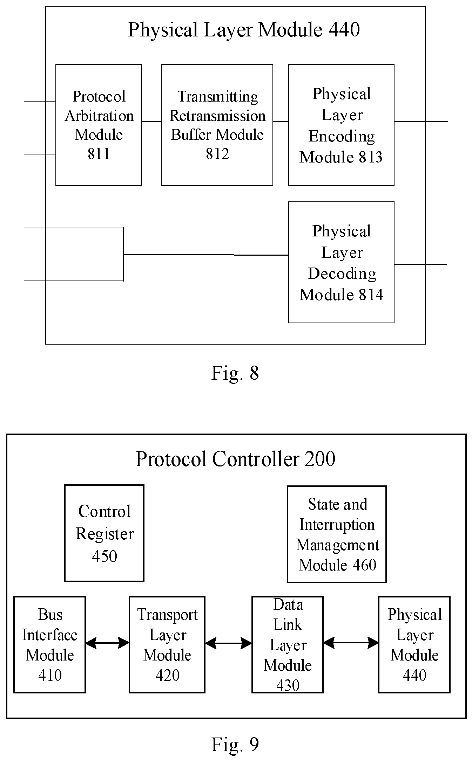

As an optional implementation, for the physical layer module provided by the embodiments of the present disclosure, Fig. 8 exemplarily illustrates a diagram of an example of a physical layer module provided by the embodiments of the present disclosure. As shown in Fig. 4, Fig. 7, and Fig. 8, the physical layer module 440 may include a protocol arbitration module 811, a transmitting retransmission buffer module 812, a physical layer encoding module 813, and a physical layer decoding module 814.

The protocol arbitration module 811 may be configured at least to perform data packet arbitration on the data packet assembled by the first partial sub-protocol transmitting data packet assembly module and the data packet assembled by the second partial sub-protocol transmitting data packet assembly module in the data link layer module 430, and send the arbitrated data packet to next module connected with the protocol arbitration module.

As an optional implementation, the arbitration of the protocol arbitration module 811 may refer to arbitrating between a data packet assembled by the first partial sub-protocol transmitting data packet assembly module (a data packet corresponding to the first partial sub-protocol) and a data packet assembled by the second partial sub-protocol transmitting data packet assembly module (a data packet corresponding to the second partial sub-protocol) in response to both of the data packet assembled by the first partial sub-protocol transmitting data packet assembly module (the data packet corresponding to the first partial sub-protocol) and the data packet assembled by the second partial sub-protocol transmitting data packet assembly module (the data packet corresponding to the second partial sub-protocol) need to be sent over the bandwidth of the physical layer, and the data packet winning in arbitration is qualified to be sent over the bandwidth of the physical layer. For example, in response to a data packet of the CXL.IO sub-protocol and a data packet of the CXL.CACHE sub-protocol/a data packet of the CXL.MEM sub-protocol needing to be sent over the bandwidth of the physical layer simultaneously, arbitration may be made between the data packet of the CXL.IO sub-protocol and the data packet of the CXL.CACHE sub-protocol/the data packet of the CXL.MEM sub-protocol, and the data packet winning in arbitration can be sent over the bandwidth of the physical layer.

As an optional implementation, an arbitration algorithm used by the protocol arbitration module 811 may be, for example, a round robin algorithm, or may be other arbitration algorithms, which will not be limited in the embodiments of the present disclosure.

As an optional implementation, the transmitting retransmission buffer module 812 is configured at least to store a data packet and support a retransmission mechanism. For specific description, the reference may be made to the description of the corresponding part of the above.

In an optional implementation, in response to the transmitting retransmission buffer module being provided in the data link layer module, the transmitting retransmission buffer module may include the first transmitting retransmission buffer module and the second transmitting retransmission buffer module as described above. For related functionality, the reference may be made to the description of the corresponding part of the above.

It should be noted that in response to the transmitting retransmission buffer module being provided in the data link layer module, a next module connected with the protocol arbitration module may be the physical layer encoding module 813; and in response to the transmitting retransmission buffer module being provided in the physical layer module, the next module connected with the protocol arbitration module may be the transmitting retransmission buffer module.

In an optional implementation, the physical layer encoding module 813 is configured at least to encode and send a data packet according to a protocol requirement of the physical layer of the chiplet.

In an optional implementation, the physical layer decoding module 814 is configured at least to decode data received from the physical layer of the chiplet according to the protocol requirement of the physical layer of the chiplet to obtain a data packet, and transmit the data packet to the data link layer module.

In an optional implementation, the physical layer encoding module 813 and the physical layer decoding module 814 are connected with the physical layer of the chiplet (e.g., the physical encoding sublayer of the chiplet). Thus, the physical layer encoding module 813 and the physical layer decoding module 814 may be connected with the physical encoding sublayer of the chiplet through the third bus interface of the protocol controller.

In a further optional implementation, based on the peripheral protocol and the inter-chip interconnection protocol of the protocol controller being connected with the physical encoding sublayer of the chiplet through the third bus interface, the embodiments of the present disclosure may provide a mechanism that the peripheral protocol and the inter-chip interconnection protocol of the protocol controller invoke the third bus interface and the physical encoding sublayer for data communication, respectively. For example, the time of the peripheral protocol of the protocol controller invoking the third bus interface and the physical encoding sublayer for data communication and the time of the inter-chip interconnection protocol of the protocol controller invoking the third bus interface and the physical encoding sublayer for data communication are negotiated and appointed such that the time of the peripheral protocol of the protocol controller invoking the third bus interface and the time of the inter-chip interconnection protocol invoking the third bus interface are staggered. Thus, the third bus interface can be multiplexed by the peripheral protocol and the inter-chip interconnection protocol of the protocol controller at different times for data communication with the physical encoding sublayer.

In a further optional implementation, Fig. 9 exemplarily illustrates a diagram of another example of a protocol controller provided by the embodiments of the present disclosure. As shown in Fig. 4 and Fig. 9, the protocol controller may further include a control register 450, and a state and interruption management module 460.

The control register 450 is configured to implement a software-configurable register which may include at least one selected from a group consisting of a configuration register defined in the peripheral protocol (e.g., the CXL protocol), a custom configuration register of a peripheral protocol controller, and a configuration register of an inter-chip interconnection protocol controller. The above-mentioned registers may each have an independent access address.

The state and interruption management module 460 may be configured to implement a software state register and interruption management, and the software state register may include at least one selected from a group consisting of a state register defined in the peripheral protocol (e.g., the CXL protocol), a custom state register of the peripheral protocol controller, and a state register of the inter-chip interconnection protocol controller.

In an optional implementation, the state and interruption management module 460 may further implement the functions of interruption management and interruption reporting according to an interruption configuration and an interruption state of the control register 450.

It should be noted that the configurable register may be configured to configure behaviors of the protocol controller. The state register may be configured to monitor the current state of the protocol controller and the current data of the data link, including whether data has a transmission error, the current transmission rate of data, the current interruption state, and the like.

The protocol controller provided by the embodiments of the present disclosure may implement interface multiplexing of the inter-chip interconnection protocol and the first partial sub-protocol (e.g., the CXL.CACHE sub-protocol and the CXL.MEM sub-protocol) of the peripheral protocol at the first bus interface connected with the system bus. At the transport layer module, other submodules of the transport layer module than the protocol parsing modules can implement multiplexing of the inter-chip interconnection protocol and the first partial sub-protocol and the second partial sub-protocol (e.g., the CXL.IO sub-protocol) of the peripheral protocol. At the data link layer module, the transmitting retransmission buffer module may be shared by the inter-chip interconnection protocol and the first partial sub-protocol of the peripheral protocol. At the physical layer module, the transmitting retransmission buffer module, the physical layer encoding module, and the physical layer decoding module may be shared by the inter-chip interconnection protocol and the first partial sub-protocol and the second partial sub-protocol of the peripheral protocol. The protocol controller provided by the embodiments of the present disclosure can support the peripheral protocol (e.g., the CXL protocol) and the inter-chip interconnection protocol. By implementing multiplexing of hardware resources, the protocol controller can greatly reduce the occupied hardware resources, and reduce required resources and difficulty of chip integration, thereby being beneficial to reducing the chip cost and shortening the design period.

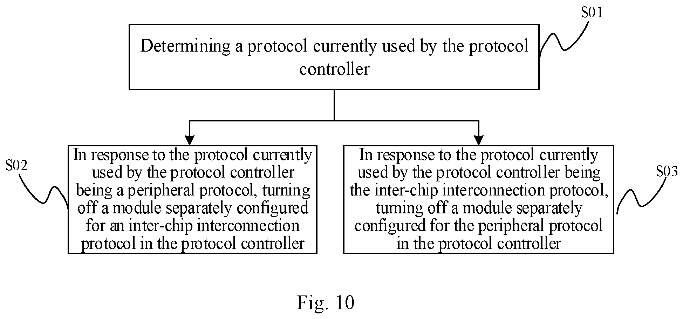

Based on the protocol controller provided by the embodiments of the present disclosure, the embodiments of the present disclosure further provide a protocol control method. As an optional implementation, Fig. 10 exemplarily illustrates an optional flowchart of a protocol control method provided by the embodiments of the present disclosure. The method may be applied to a protocol controller. With reference to Fig. 10, the method may include the following steps.

In step S01, a protocol currently used by the protocol controller is determined.

In the embodiments of the present disclosure, the protocol currently used by the protocol controller may be a peripheral protocol, or an inter-chip interconnection protocol.

In step S02, in response to the protocol currently used by the protocol controller being a peripheral protocol, a module separately configured for an inter-chip interconnection protocol in the protocol controller is turned off.

In response to the protocol currently used by the protocol controller being the peripheral protocol (including a first partial sub-protocol and a second partial sub-protocol of the peripheral protocol), the protocol controller is currently used as a peripheral protocol controller. Thus, the module separately configured for the inter-chip interconnection protocol in the protocol controller may be turned off to reduce power consumption.

In an optional implementation, turning off the module separately configured for the inter-chip interconnection protocol in the protocol controller may include turning off at least one selected from a group consisting of:
a software-configurable register related to inter-chip interconnection in a control register, a software state register and an interruption management related module related to inter-chip interconnection in a state and interruption management module, a protocol parsing module corresponding to the inter-chip interconnection protocol in a transport layer module, and an inter-chip interconnection transmitting data packet assembly module and an inter-chip interconnection receiving data packet disassembly module in a data link layer module.

In step S03, in response to the protocol currently used by the protocol controller being the inter-chip interconnection protocol, a module separately configured for the peripheral protocol in the protocol controller is turned off.

In response to the protocol currently used by the protocol controller being the inter-chip interconnection protocol, the protocol controller is currently used as inter-chip interconnection controller. Thus, the module separately configured for the peripheral protocol in the protocol controller may be turned off (e.g., a module separately configured for the first partial sub-protocol of the peripheral protocol needs to be turned off, and a module separately configured for the second partial sub-protocol of the peripheral protocol needs to be turned off) to reduce power consumption.

In an optional implementation, turning off the module separately configured for the peripheral protocol in the protocol controller may include turning off at least one selected from a group consisting of:
a software-configurable register related to the peripheral protocol (e.g., the CXL protocol) in the control register, a software state register and an interruption management related module related to the peripheral protocol (e.g., the CXL protocol) in the state and interruption management module, a second bus interface corresponding to the second partial sub-protocol of the peripheral protocol, a parsing module corresponding to the peripheral protocol (e.g., the CXL protocol) in the transport layer module (such as a protocol parsing module corresponding to the first partial sub-protocol and a protocol parsing module corresponding to the second partial sub-protocol in the transport layer module), a protocol conversion module related to the peripheral protocol (such as a transmitting-direction first partial sub-protocol conversion module, a transmitting-direction second partial sub-protocol conversion module, a receiving-direction first partial sub-protocol conversion module, and a receiving-direction second partial sub-protocol conversion module), a transmitting data packet assembly module (such as a first partial sub-protocol transmitting data packet assembly module and a second partial sub-protocol transmitting data packet assembly module) and a receiving data packet disassembly module (such as a first partial sub-protocol receiving data packet disassembly module and a second partial sub-protocol receiving data packet disassembly module) in the data link layer module.

Based on the protocol control method provided by the embodiments of the present disclosure, according to the embodiments of the present disclosure, in response to the protocol controller using the peripheral protocol, the module separately configured for an inter-chip interconnection protocol in the protocol controller is turned off; and in response to the protocol controller using the inter-chip interconnection protocol, the module separately configured for the peripheral protocol in the protocol controller is turned off. Thus, a module unrelated to the currently used protocol in the protocol controller is turned off to reduce the power consumption of the protocol controller.

The embodiments of the present disclosure further provide a chiplet which may include the protocol controller provided by the embodiments of the present disclosure.

In a further optional implementation, the chiplet provided by the embodiments of the present disclosure may further include a physical encoding sublayer connected with the protocol controller, and a physical layer interface connected with the physical encoding sublayer.

The embodiments of the present disclosure further provide a system on chip which may include a plurality of interconnected chiplets. The chiplets are, for example, the chiplets provided by the embodiments of the present disclosure.

The embodiments of the present disclosure further provide an electronic device, e.g., a terminal device or a server device. The electronic device may include the chiplet provided by the embodiments of the present disclosure or the system on chip provided by the embodiments of the present disclosure.

A plurality of embodiment solutions provided by the embodiments of the present disclosure are described above. The optional ways described in the embodiment solutions may be combined with and cross-referenced to one another in a non-conflicting manner so that a plurality of possible embodiment solutions can be derived. These can all be considered as embodiment solutions disclosed by the embodiments of the present disclosure.

Although being disclosed as described above, the present disclosure is not limited thereto. Therefore, the protection scope of the present disclosure should be subject to the scope as defined by the claims.

## Claims

1. A protocol controller (200), wherein the protocol controller (200) is configured for a chiplet, and the protocol controller (200) comprises:
a first bus interface (210) connected with a system bus, wherein the first bus interface (210) is configured to implement an inter-chip interconnection protocol and a first partial sub-protocol of a peripheral protocol, wherein the inter-chip interconnection protocol is used for interconnecting the chiplet with another chiplet, and the peripheral protocol is used for interconnecting the chiplet with a peripheral device; and
a second bus interface (220) connected with the system bus, wherein the second bus interface (220) is configured to implement a second partial sub-protocol of the peripheral protocol, and the first partial sub-protocol and the second partial sub-protocol are configured to be implemented by different bus interfaces,
wherein the chiplet uses either the inter-chip interconnection protocol or the peripheral protocol at the same time by the protocol controller (200).

2. The protocol controller (200) according to claim 1, further comprising a bus interface module (410), wherein the bus interface module (410) comprises a first interface management module (411) and a second interface management module (412);
the first interface management module (411) is configured to manage connection between the first bus interface (210) and the system bus; and
the second interface management module (412) is configured to manage connection between the second bus interface (220) and the system bus.

3. The protocol controller (200) according to claim 2, wherein the first interface management module (411) being configured to manage connection between the first bus interface (210) and the system bus comprises:
managing connection and disconnection between the first bus interface (210) and the system bus based on internal states of the protocol controller (200) regarding the inter-chip interconnection protocol and the first partial sub-protocol, and a state of the first bus interface (210);
the second interface management module (412) being configured to manage connection between the second bus interface (220) and the system bus comprises:
managing connection and disconnection between the second bus interface (220) and the system bus based on an internal state of the protocol controller (200) regarding the second partial sub-protocol and a state of the second bus interface (220);
the first interface management module (411) being configured to manage connection and disconnection between the first bus interface (210) and the system bus based on the internal state of the protocol controller (200) regarding the inter-chip interconnection protocol and the first partial sub-protocol, and the state of the first bus interface (210) comprises:
in response to processing states of internal modules of the protocol controller (200) regarding the inter-chip interconnection protocol and the first partial sub-protocol being all idle states and the first bus interface (210) being also in an idle state, disconnecting the connection between the first bus interface (210) and the system bus; and
in response to any internal module of the protocol controller (200) having a data processing operation regarding the inter-chip interconnection protocol or the first partial sub-protocol, restoring the connection between the first bus interface (210) and the system bus; and
the second interface management module (412) being configured to manage connection and disconnection between the second bus interface (220) and the system bus based on the internal state of the protocol controller (200) regarding the second partial sub-protocol and the state of the second bus interface (220) comprises:
in response to processing states of the internal modules of the protocol controller (200) regarding the second partial sub-protocol being all idle states and the second bus interface (220) being also in an idle state, disconnecting the connection between the second bus interface (220) and the system bus; and
in response to any internal module of the protocol controller (200) having a data processing operation regarding the second partial sub-protocol, restoring the connection between the second bus interface (220) and the system bus.

4. The protocol controller (200) according to claim 1, further comprising a transport layer module (420), a data link layer module (430), and a physical layer module (440),
wherein a transport layer interface of the transport layer module (420) is connected with the system bus separately through the first bus interface (210) and the second bus interface (220); the transport layer module (420) is connected with the data link layer module (430), and the data link layer module (430) is connected with the physical layer module (440); and the physical layer module (440) is connected with a physical encoding sublayer of the chiplet through a third bus interface of the protocol controller (200).

5. The protocol controller (200) according to claim 4, wherein the transport layer module (420) is provided with a first transport layer submodule (601) and a second transport layer submodule (602), the first transport layer submodule (601) is configured to implement data transmission control of the inter-chip interconnection protocol and the first partial sub-protocol, and the second transport layer submodule (602) is configured to implement data transmission control of the second partial sub-protocol;
the transport layer module (420) comprises a plurality of submodules shared by the first transport layer submodule (601) and the second transport layer submodule (602), and the plurality of submodules are part of submodules within the transport layer module (420); and
the plurality of submodules comprise at least:
a transport layer first submodule set, configured to process a request from a peripheral or another chiplet that needs to be sent to the system bus, and a response from the system bus that needs to be sent to a peripheral or another chiplet; and
a transport layer second submodule set, configured to process a request from the system bus that needs to be sent to a peripheral or another chiplet, and a response from a peripheral or another chiplet that needs to be sent to the system bus.

6. The protocol controller (200) according to claim 5, wherein the transport layer first submodule set comprises at least a transmitting request queue (421) and a receiving response queue (422);
the transmitting request queue (421) is configured at least to store a request to be sent of the chiplet, and the request to be sent is from a peripheral connected with the chiplet or another chiplet, and needs to be sent to the system bus;
the receiving response queue (422) is configured at least to store a response to be received correspondingly marked for a request to be sent that has been sent in the transmitting request queue (421), and store a first response of the system bus, and a request that the stored first response is directed at is consistent with the request to be sent that the response to be received stored in the receiving response queue (422) is directed at;
in response to a data transmitting condition for transmitting data to the system bus being met, the request to be sent is dequeued and cleared from the transmitting request queue (421), and the request to be sent and data corresponding to the request to be sent are sent to the system bus;
in response to a data transmitting condition for transmitting data to a data link layer being met, the first response is dequeued and cleared from the receiving response queue (422), and the first response and data corresponding to the first response are sent to the data link layer module (430);
the transport layer second submodule set comprises at least a receiving request queue (423) and a transmitting response queue (424);
the receiving request queue (423) is configured at least to store a receiving request of the chiplet, and the receiving request is from the system bus and needs to be sent to the peripheral connected with the chiplet or another chiplet;
the transmitting response queue (424) is configured at least to store a response to be received correspondingly marked for a receiving request that has been sent, and store a second response of the peripheral or another chiplet, and a request that the stored second response is directed at is consistent with the receiving request that the response to be received stored in the transmitting response queue (424) is directed at;
in response to the data transmitting condition for transmitting data to the data link layer being met, the receiving request is dequeued and cleared from the receiving request queue (423), and the receiving request and data corresponding to the receiving request are sent to the data link layer module (430);
in response to the data transmitting condition for transmitting data to the system bus being met, the second response is dequeued and cleared from the transmitting response queue (424), and the second response and data corresponding to the second response are sent to the system bus;
the plurality of submodules further comprise a transmitting data buffer (425), a receiving data buffer (426), and a queue scheduling module (427);
the transmitting data buffer (425) is configured at least to store the data corresponding to the request to be sent in the transmitting request queue (421) and store the data corresponding to the second response in the transmitting response queue (424);
the receiving data buffer (426) is configured at least to store the data corresponding to the receiving request in the receiving request queue (423) and store the data corresponding to the first response in the receiving response queue (422); and
the queue scheduling module (427) is configured at least to arbitrate and schedule enqueuing processing and dequeuing processing of the request to be sent in the transmitting request queue (421), the first response in the receiving response queue (422), the receiving request in the receiving request queue (423), and the second response in the transmitting response queue (424), and an arbitration and scheduling mechanism of the queue scheduling module (427) is configured and defined by a configuration register.

7. The protocol controller (200) according to claim 5 or 6, wherein the transport layer module (420) is provided with a plurality of protocol parsing modules (428), and a total number of the plurality of protocol parsing modules (428) corresponds to a total number of protocols that require independent configuration of protocol parsing modules (428);
the plurality of protocol parsing modules (428) comprise a protocol parsing module corresponding to the inter-chip interconnection protocol, a protocol parsing module corresponding to the first partial sub-protocol, and a protocol parsing module corresponding to the second partial sub-protocol; and
the protocol parsing module corresponding to the inter-chip interconnection protocol and the protocol parsing module corresponding to the first partial sub-protocol are provided in the first transport layer submodule (601), and the protocol parsing module corresponding to the second partial sub-protocol is provided in the second transport layer submodule (602).

8. The protocol controller (200) according to claim 4, wherein the data link layer module (430) comprises a transmitting-direction first partial sub-protocol conversion module (711), a first partial sub-protocol transmitting data packet assembly module (712), an inter-chip interconnection transmitting data packet assembly module (713), a transmitting-direction second partial sub-protocol conversion module (715), and a second partial sub-protocol transmitting data packet assembly module (716);
the transmitting-direction first partial sub-protocol conversion module (711) is configured at least to convert a request or a response and/or data transmitted by the transport layer module (420) from a system bus protocol to the first partial sub-protocol of the peripheral protocol;
the first partial sub-protocol transmitting data packet assembly module (712) is configured at least to assemble the request or the response and/or the data for which the protocol is converted by the transmitting-direction first partial sub-protocol conversion module (711) into a data packet matching the first partial sub-protocol;
the inter-chip interconnection transmitting data packet assembly module (713) is configured at least to assemble the request or the response and/or the data transmitted by the transport layer module (420) into a data packet matching the inter-chip interconnection protocol according to the inter-chip interconnection protocol;
the transmitting-direction second partial sub-protocol conversion module (715) is configured at least to convert the request or the response and/or the data transmitted by the transport layer module (420) from the system bus protocol to the second partial sub-protocol of the peripheral protocol;
the second partial sub-protocol transmitting data packet assembly module (716) is configured at least to assemble the request or the response and/or the data for which the protocol is converted by the transmitting-direction second partial sub-protocol conversion module (715) into a data packet matching the second partial sub-protocol;
the data link layer module (430) further comprises a first partial sub-protocol receiving data packet disassembly module (721), a receiving-direction first partial sub-protocol conversion module (722), an inter-chip interconnection receiving data packet disassembly module (723), a second partial sub-protocol receiving data packet disassembly module (724), and a receiving-direction second partial sub-protocol conversion module (725);
the first partial sub-protocol receiving data packet disassembly module (721) is configured at least to parse a data packet related to the first partial sub-protocol transmitted by the physical layer module (440) from the peripheral according to the first partial sub-protocol of the peripheral protocol;
the receiving-direction first partial sub-protocol conversion module (722) is configured at least to convert the data packet parsed by the first partial sub-protocol receiving data packet disassembly module (721) from the first partial sub-protocol of the peripheral protocol to the system bus protocol;
the inter-chip interconnection receiving data packet disassembly module (723) is configured at least to parse a data packet transmitted by the physical layer module (440) from another chiplet according to the inter-chip interconnection protocol;
the second partial sub-protocol receiving data packet disassembly module (724) is configured at least to parse a data packet related to the second partial sub-protocol transmitted by the physical layer module (440) from the peripheral according to the second partial sub-protocol of the peripheral protocol; and
the receiving-direction second partial sub-protocol conversion module (725) is configured at least to convert the data packet parsed by the second partial sub-protocol receiving data packet disassembly module (724) from the second partial sub-protocol of the peripheral protocol to the system bus protocol.

9. The protocol controller (200) according to claim 8, wherein the physical layer module (440) comprises a protocol arbitration module (811), a physical layer encoding module (813), and a physical layer decoding module (814);
the protocol arbitration module (811) is configured at least to perform data packet arbitration on the data packet assembled by the first partial sub-protocol transmitting data packet assembly module (712) and the data packet assembled by the second partial sub-protocol transmitting data packet assembly module (716) in the data link layer module (430), and send the arbitrated data packets to a next module connected with the protocol arbitration module (811);
the physical layer encoding module (813) is configured at least to encode and send a data packet according to a protocol requirement of a physical layer of the chiplet;
the physical layer decoding module (814) is configured at least to decode data received from the physical layer of the chiplet according to the protocol requirement of the physical layer of the chiplet to obtain a data packet, and transmit the data packet to the data link layer module (430);
the protocol controller (200) further comprises a transmitting retransmission buffer module (812),
wherein the transmitting retransmission buffer module (812) is configured at least to store a data packet sent to the chiplet or the peripheral, and the data packet is a data packet assembled by the data link layer module (430);
in response to the data packet being received correctly, the correctly received data packet is deleted from the transmitting retransmission buffer module (812);
in response to the data packet being not received correctly, the incorrectly received data packet is retrieved from the transmitting retransmission buffer module (812) for retransmission;
the transmitting retransmission buffer module (812) is provided in the data link layer module (430) or the physical layer module (440);
in response to a version of the peripheral protocol being a first version, the transmitting retransmission buffer module (812) is provided in the data link layer module (430); and
in response to the version of the peripheral protocol being a second version, the transmitting retransmission buffer module (812) is provided in the physical layer module (440), and the second version is higher than the first version.

10. The protocol controller (200) according to claim 9, wherein the transmitting retransmission buffer module (812) is provided in the data link layer module (430), and the transmitting retransmission buffer module (812) comprises a first transmitting retransmission buffer module (714) and a second transmitting retransmission buffer module (717);
the first transmitting retransmission buffer module (714) is configured at least to store the data packets assembled by the first partial sub-protocol transmitting data packet assembly module (712) and the inter-chip interconnection transmitting data packet assembly module (713); in response to the data packet assembled by the first partial sub-protocol transmitting data packet assembly module (712) being received correctly by the peripheral, or the data packet assembled by the inter-chip interconnection transmitting data packet assembly module (713) being received correctly by another chiplet, the correctly received data packet is deleted from the first transmitting retransmission buffer module (714); and in response to the data packet being not received correctly, the incorrectly received data packet is retrieved from the first transmitting retransmission buffer module (714) for retransmission;
the second transmitting retransmission buffer module (717) is configured at least to store the data packet assembled by the second partial sub-protocol transmitting data packet assembly module (716); in response to the data packet assembled by the second partial sub-protocol transmitting data packet assembly module (716) being received correctly by the peripheral, the correctly received data packet is deleted from the second transmitting retransmission buffer module (717); and in response to the data packet being not received correctly, the incorrectly received data packet is retrieved from the second transmitting retransmission buffer module (717) for retransmission.

11. The protocol controller (200) according to claim 9, wherein in response to the transmitting retransmission buffer module (812) being provided in the physical layer module (440), the next module connected with the protocol arbitration module (811) is the transmitting retransmission buffer module (812); and
in response to the transmitting retransmission buffer module (812) being provided in the data link layer module (430), the next module connected with the protocol arbitration module (811) is the physical layer encoding module (813).

12. The protocol controller (200) according to claim 4, further comprising a control register (450), and a state and interruption management module (460),
wherein the control register (450) is configured to implement a software-configurable register, and the software-configurable register comprises at least one selected from a group consisting of a configuration register defined in the peripheral protocol, a custom configuration register of a peripheral protocol controller (200), and a configuration register of an inter-chip interconnection protocol controller (200);
the state and interruption management module (460) is configured to implement a software state register and interruption management, and the software state register comprises at least one selected from a group consisting of a state register defined in the peripheral protocol, a custom state register of the peripheral protocol controller (200), and a state register of the inter-chip interconnection protocol controller (200); and
the state and interruption management module (460) is further configured to implement interruption management and interruption reporting according to an interruption configuration and an interruption state of the control register (450).

13. A protocol control method, comprising:
determining (S01) a protocol currently used by the protocol controller (200) according to any one of claims 1 to 12;
in response to the protocol currently used by the protocol controller (200) being the peripheral protocol, turning off (S02) a module separately configured for the inter-chip interconnection protocol in the protocol controller (200); and
in response to the protocol currently used by the protocol controller (200) being the inter-chip interconnection protocol, turning off (S03) a module separately configured for the peripheral protocol in the protocol controller (200).

14. The protocol control method according to claim 13, wherein the turning off the module separately configured for the inter-chip interconnection protocol in the protocol controller comprises turning off at least one selected from a group consisting of:
a software-configurable register related to inter-chip interconnection in a control register, a software state register and an interruption management related module related to inter-chip interconnection in a state and interruption management module, a protocol parsing module corresponding to the inter-chip interconnection protocol in a transport layer module, and an inter-chip interconnection transmitting data packet assembly module and an inter-chip interconnection receiving data packet disassembly module in a data link layer module.

15. The protocol control method according to claim 14, wherein the turning off the module separately configured for the peripheral protocol in the protocol controller comprises turning off at least one selected from a group consisting of:
a software-configurable register related to the peripheral protocol in the control register, a software state register and an interruption management related module related to the peripheral protocol in the state and interruption management module, a second bus interface corresponding to a second partial sub-protocol of the peripheral protocol, a protocol parsing module corresponding to the first partial sub-protocol and a protocol parsing module corresponding to the second partial sub-protocol in the transport layer module, and a transmitting-direction first partial sub-protocol conversion module, a first partial sub-protocol transmitting data packet assembly module, a transmitting-direction second partial sub-protocol conversion module, a second partial sub-protocol transmitting data packet assembly module, a first partial sub-protocol receiving data packet disassembly module, a receiving-direction first partial sub-protocol conversion module, a second partial sub-protocol receiving data packet disassembly module, and a receiving-direction second partial sub-protocol conversion module in the data link layer module.

16. A chiplet, comprising the protocol controller according to any one of claims 1 to 12.

17. The chiplet according to claim 16, further comprising a physical encoding sublayer connected with the protocol controller, and a physical layer interface connected with the physical encoding sublayer.

18. A system on chip, comprising a plurality of interconnected chiplets, wherein the chiplets comprise the chiplet according to claim 16 or 17.

## Patentansprüche

1. Protokollsteuerung (200), wobei die Protokollsteuerung (200) für ein Chiplet konfiguriert ist und die Protokollsteuerung (200) Folgendes umfasst:
eine erste Busschnittstelle (210), die mit einem Systembus verbunden ist, wobei die erste Busschnittstelle (210) so konfiguriert ist, dass sie ein Interchip-Verbindungsprotokoll und ein erstes Teil-Unterprotokoll eines Peripherieprotokolls implementiert, wobei das Interchip-Verbindungsprotokoll zum Verbinden des Chiplets mit einem anderen Chiplet verwendet wird und das Peripherieprotokoll zum Verbinden des Chiplets mit einer peripheren Vorrichtung verwendet wird; und
eine zweite Busschnittstelle (220), die mit dem Systembus verbunden ist, wobei die zweite Busschnittstelle (220) so konfiguriert ist, dass sie ein zweites Teil-Unterprotokoll des Peripherieprotokolls implementiert, und das erste Teil-Unterprotokoll und das zweite Teil-Unterprotokoll so konfiguriert sind, dass sie von verschiedenen Busschnittstellen implementiert werden,
wobei das Chiplet entweder das Interchip-Verbindungsprotokoll oder das Peripherieprotokoll gleichzeitig über die Protokollsteuerung (200) verwendet.

2. Protokollsteuerung (200) nach Anspruch 1, ferner umfassend ein Busschnittstellenmodul (410), wobei das Busschnittstellenmodul (410) ein erstes Schnittstellenverwaltungsmodul (411) und ein zweites Schnittstellenverwaltungsmodul (412) umfasst;
das erste Schnittstellenverwaltungsmodul (411) so konfiguriert ist, dass es die Verbindung zwischen der ersten Busschnittstelle (210) und dem Systembus verwaltet; und
das zweite Schnittstellenverwaltungsmodul (412) so konfiguriert ist, dass es die Verbindung zwischen der zweiten Busschnittstelle (220) und dem Systembus verwaltet.

3. Protokollsteuerung (200) nach Anspruch 2, wobei das erste Schnittstellenverwaltungsmodul (411), das so konfiguriert ist, dass es die Verbindung zwischen der ersten Busschnittstelle (210) und dem Systembus verwaltet, Folgendes umfasst:
Verwalten der Verbindung und Trennung zwischen der ersten Busschnittstelle (210) und dem Systembus basierend auf internen Zuständen der Protokollsteuerung (200) in Bezug auf das Interchip-Verbindungsprotokoll und das erste Teil-Unterprotokoll und einem Zustand der ersten Busschnittstelle (210);
das zweite Schnittstellenverwaltungsmodul (412), das so konfiguriert ist, dass es die Verbindung zwischen der zweiten Busschnittstelle (220) und dem Systembus verwaltet, Folgendes umfasst:
Verwalten der Verbindung und Trennung zwischen der zweiten Busschnittstelle (220) und dem Systembus basierend auf einem internen Zustand der Protokollsteuerung (200) in Bezug auf das zweite Teil-Unterprotokoll und einem Zustand der zweiten Busschnittstelle (220);
das erste Schnittstellenverwaltungsmodul (411), das so konfiguriert ist, dass es die Verbindung und Trennung zwischen der ersten Busschnittstelle (210) und dem Systembus basierend auf dem internen Zustand der Protokollsteuerung (200) in Bezug auf das Interchip-Verbindungsprotokoll und das erste Teil-Unterprotokoll und dem Zustand der ersten Busschnittstelle (210) verwaltet, Folgendes umfasst:
als Reaktion darauf, dass die Verarbeitungszustände interner Module der Protokollsteuerung (200) in Bezug auf das Interchip-Verbindungsprotokoll und das erste Teil-Unterprotokoll alle Ruhezustände sind und die erste Busschnittstelle (210) ebenfalls in einem Ruhezustand ist, Trennen der Verbindung zwischen der ersten Busschnittstelle (210) und dem Systembus; und
als Reaktion auf jedes interne Modul der Protokollsteuerung (200), das einen Datenverarbeitungsvorgang in Bezug auf das Interchip-Verbindungsprotokoll oder das erste Teil-Unterprotokoll aufweist, Wiederherstellen der Verbindung zwischen der ersten Busschnittstelle (210) und dem Systembus; und
das zweite Schnittstellenverwaltungsmodul (412), das so konfiguriert ist, dass es die Verbindung und Trennung zwischen der zweiten Busschnittstelle (220) und dem Systembus basierend auf dem internen Zustand der Protokollsteuerung (200) in Bezug auf das zweite Teil-Unterprotokoll und den Zustand der zweiten Busschnittstelle (220) verwaltet, Folgendes umfasst:
als Reaktion darauf, dass die Verarbeitungszustände der internen Module der Protokollsteuerung (200) in Bezug auf das zweite Teil-Unterprotokoll alle Ruhezustände sind und die zweite Busschnittstelle (220) ebenfalls in einem Ruhezustand ist, Trennen der Verbindung zwischen der zweiten Busschnittstelle (220) und dem Systembus; und
als Reaktion auf jedes interne Modul der Protokollsteuerung (200), das einen Datenverarbeitungsvorgang in Bezug auf das zweite Teil-Unterprotokoll aufweist, Wiederherstellen der Verbindung zwischen der zweiten Busschnittstelle (220) und dem Systembus.

4. Protokollsteuerung (200) nach Anspruch 1, ferner umfassend ein Transportschichtmodul (420), ein Datenverbindungsschichtmodul (430) und ein physikalisches Schichtmodul (440),
wobei eine Transportschichtschnittstelle des Transportschichtmoduls (420) separat über die erste Busschnittstelle (210) und die zweite Busschnittstelle (220) mit dem Systembus verbunden ist; das Transportschichtmodul (420) mit dem Datenverbindungsschichtmodul (430) verbunden ist und das Datenverbindungsschichtmodul (430) mit dem physikalischen Schichtmodul (440) verbunden ist; und das physikalische Schichtmodul (440) über eine dritte Busschnittstelle der Protokollsteuerung (200) mit einer physikalischen Codierungsunterschicht des Chiplets verbunden ist.

5. Protokollsteuerung (200) nach Anspruch 4, wobei das Transportschichtmodul (420) mit einem ersten Transportschicht-Untermodul (601) und einem zweiten Transportschicht-Untermodul (602) versehen ist, das erste Transportschicht-Untermodul (601) so konfiguriert ist, dass es die Datenübertragungssteuerung des Interchip-Verbindungsprotokolls und des ersten Teil-Unterprotokolls implementiert, und das zweite Transportschicht-Untermodul (602) so konfiguriert ist, dass es die Datenübertragungssteuerung des zweiten Teil-Unterprotokolls implementiert;
das Transportschichtmodul (420) eine Vielzahl von Untermodulen umfasst, die sich das erste Transportschicht-Untermodul (601) und das zweite Transportschicht-Untermodul (602) teilen, und die Vielzahl von Untermodulen Teil von Untermodulen innerhalb des Transportschichtmoduls (420) sind; und
die Vielzahl von Untermodulen mindestens Folgendes umfassen:
einen Satz des ersten Transportschicht-Untermoduls, der so konfiguriert ist, dass er eine Anfrage von einem Peripheriegerät oder einem anderen Chiplet, die an den Systembus gesendet werden muss, und eine Antwort vom Systembus, die an ein Peripheriegerät oder einen anderen Chiplet gesendet werden muss, verarbeitet; und
einen Satz des zweiten Transportschicht-Untermoduls, der so konfiguriert ist, dass er eine Anfrage vom Systembus, die an ein Peripheriegerät oder einen anderen Chiplet gesendet werden muss, und eine Antwort von einem Peripheriegerät oder einem anderen Chiplet, die an den Systembus gesendet werden muss, verarbeitet.

6. Protokollsteuerung (200) nach Anspruch 5, wobei der Satz des ersten Transportschicht-Untermoduls mindestens eine Übertragungsanfragewarteschlange (421) und eine Empfangsantwortwarteschlange (422) umfasst;
die Übertragungsanfragewarteschlange (421) mindestens so konfiguriert ist, dass sie eine zu sendende Anfrage des Chiplets speichert, und die zu sendende Anfrage von einem Peripheriegerät, das mit dem Chiplet oder einem anderen Chiplet verbunden ist, stammt und an den Systembus gesendet werden muss;
die Empfangsantwortwarteschlange (422) mindestens so konfiguriert ist, dass sie eine entsprechend für eine zu sendende Anfrage markierte zu empfangende Antwort speichert, die in der Sendeanfragewarteschlange (421) gesendet wurde, und eine erste Antwort des Systembusses speichert, und eine Anfrage, an die die gespeicherte erste Antwort gerichtet ist, mit der zu sendenden Anfrage übereinstimmt, an die die in der Empfangsantwortwarteschlange (422) gespeicherte zu empfangende Antwort gerichtet ist;
als Reaktion darauf, dass eine Datenübertragungsbedingung für die Übertragung von Daten an den Systembus erfüllt ist, die zu sendende Anfrage aus der Übertragungsanfragewarteschlange (421) entfernt und gelöscht wird und die zu sendende Anfrage und die Daten, die der zu sendenden Anfrage entsprechen, an den Systembus gesendet werden;
als Reaktion darauf, dass eine Datenübertragungsbedingung für die Übertragung von Daten an eine Datenverbindungsschicht erfüllt ist, die erste Antwort aus der Empfangsantwortwarteschlange (422) entfernt und gelöscht wird und die erste Antwort und die Daten, die der ersten Antwort entsprechen, an das Datenverbindungsschichtmodul (430) gesendet werden;
der Satz des zweiten Transportschicht-Untermoduls mindestens eine Empfangsanfragewarteschlange (423) und eine Übertragungsantwortwarteschlange (424) umfasst;
die Empfangsanfragewarteschlange (423) mindestens so konfiguriert ist, dass sie eine Empfangsanfrage des Chiplets speichert, und die Empfangsanfrage vom Systembus stammt und an das mit dem Chiplet oder einem anderen Chiplet verbundene Peripheriegerät gesendet werden muss;
die Übertragungsantwortwarteschlange (424) mindestens so konfiguriert ist, dass sie eine entsprechend für eine gesendete Empfangsanfrage markierte zu empfangende Antwort speichert und eine zweite Antwort des Peripheriegeräts oder eines anderen Chiplets speichert, und eine Anfrage, an die die gespeicherte zweite Antwort gerichtet ist, mit der Empfangsanfrage übereinstimmt, an die die in der Übertragungsantwortwarteschlange (424) gespeicherte zu empfangende Antwort gerichtet ist;
als Reaktion darauf, dass die Datenübertragungsbedingung für die Übertragung von Daten an die Datenverbindungsschicht erfüllt ist, die Empfangsanfrage aus der Empfangsanfragewarteschlange (423) entfernt und gelöscht wird und die Empfangsanfrage und die Daten, die der Empfangsanfrage entsprechen, an das Datenverbindungsschichtmodul (430) gesendet werden;
als Reaktion darauf, dass die Datenübertragungsbedingung für die Übertragung von Daten an den Systembus erfüllt ist, die zweite Antwort aus der Übertragungsantwortwarteschlange (424) entfernt und gelöscht wird und die zweite Antwort und die Daten, die der zweiten Antwort entsprechen, an den Systembus gesendet werden;
die Vielzahl von Untermodulen ferner einen Übertragungsdatenpuffer (425), einen Empfangsdatenpuffer (426) und ein Warteschlangen-Planungsmodul (427) umfassen;
der Übertragungsdatenpuffer (425) mindestens so konfiguriert ist, dass er die Daten, die der zu sendenden Anfrage in der Übertragungsanfragewarteschlange (421) entsprechen, speichert und die Daten, die der zweiten Antwort in der Übertragungsantwortwarteschlange (424) entsprechen, speichert;
der Empfangsdatenpuffer (426) mindestens so konfiguriert ist, dass er die Daten, die der Empfangsanfrage in der Empfangsanfragewarteschlange (423) entsprechen, speichert und die Daten, die der ersten Antwort in der Empfangsantwortwarteschlange (422) entsprechen, speichert; und
das Warteschlangen-Planungsmodul (427) mindestens so konfiguriert ist, dass es die Warteschlangen-Einreihungsverarbeitung und die Warteschlangen-Entfernungsverarbeitung der zu sendenden Anfrage in der Übertragungsanfragewarteschlange (421), der ersten Antwort in der Empfangsantwortwarteschlange (422), der Empfangsanfrage in der Empfangsanfragewarteschlange (423) und der zweiten Antwort in der Übertragungsantwortwarteschlange (424) arbitriert und plant, und ein Arbitrierungs- und Planungsmechanismus des Warteschlangen-Planungsmoduls (427) durch ein Konfigurationsregister konfiguriert und definiert wird.

7. Protokollsteuerung (200) nach Anspruch 5 oder 6, wobei das Transportschichtmodul (420) mit einer Vielzahl von Protokoll-Parsingmodulen (428) versehen ist, und eine Gesamtzahl der Vielzahl von Protokoll-Parsingmodulen (428) einer Gesamtzahl von Protokollen entspricht, die eine unabhängige Konfiguration von Protokoll-Parsingmodulen (428) erfordern;
die Vielzahl von Protokoll-Parsingmodulen (428) ein Protokoll-Parsingmodul, das dem Interchip-Verbindungsprotokoll entspricht, ein Protokoll-Parsingmodul, das dem ersten Teil-Unterprotokoll entspricht, und ein Protokoll-Parsingmodul umfassen, das dem zweiten Teil-Unterprotokoll entspricht; und
das dem Interchip-Verbindungsprotokoll entsprechende Protokoll-Parsingmodul und das dem ersten Teil-Unterprotokoll entsprechende Protokoll-Parsingmodul in dem ersten Transportschicht-Untermodul (601) bereitgestellt sind, und das dem zweiten Teil-Unterprotokoll entsprechende Protokoll-Parsingmodul in dem zweiten Transportschicht-Untermodul (602) bereitgestellt ist.

8. Protokollsteuerung (200) nach Anspruch 4, wobei das Datenverbindungsschichtmodul (430) ein Übertragungsrichtung-Umwandlungsmodul (711) des ersten Teil-Unterprotokolls, ein Übertragungsdatenpaket-Zusammenstellungsmodul (712) des ersten Teil-Unterprotokolls, ein Übertragungsdatenpaket-Zusammenstellungsmodul (713) der Interchip-Verbindung, ein Übertragungsrichtung-Umwandlungsmodul (715) des zweiten Teil-Unterprotokolls und ein Übertragungsdatenpaket-Zusammenstellungsmodul (716) des zweiten Teil-Unterprotokolls umfasst;
das Übertragungsrichtung-Umwandlungsmodul (711) des ersten Teil-Unterprotokolls mindestens so konfiguriert ist, dass es eine Anfrage oder eine Antwort und/oder Daten, die vom Transportschichtmodul (420) übertragen werden, von einem Systembusprotokoll in das erste Teil-Unterprotokoll des Peripherieprotokolls umwandelt;
das Übertragungsdatenpaket-Zusammenstellungsmodul (712) des ersten Teil-Unterprotokolls mindestens so konfiguriert ist, dass es die Anfrage oder die Antwort und/oder die Daten, für die das Protokoll durch das Übertragungsrichtung-Umwandlungsmodul (711) des ersten Teil-Unterprotokolls in ein dem ersten Teil-Unterprotokoll entsprechendes Datenpaket umgewandelt wird, zusammenstellt;
das Übertragungsdatenpaket-Zusammenstellungsmodul (713) der Interchip-Verbindung mindestens so konfiguriert ist, dass es die Anfrage oder die Antwort und/oder die Daten, die vom Transportschichtmodul (420) übertragen werden, in ein dem Interchip-Verbindungsprotokoll entsprechendes Datenpaket gemäß dem Interchip-Verbindungsprotokoll zusammenstellt;
das Übertragungsrichtung-Umwandlungsmodul (715) des zweiten Teil-Unterprotokolls mindestens so konfiguriert ist, dass es die Anfrage oder die Antwort und/oder die Daten, die vom Transportschichtmodul (420) übertragen werden, aus dem Systembusprotokoll in das zweite Teil-Unterprotokoll des Peripherieprotokolls umwandelt;
das Übertragungsdatenpaket-Zusammenstellungsmodul (716) des zweiten Teil-Unterprotokolls mindestens so konfiguriert ist, dass es die Anfrage oder die Antwort und/oder die Daten, für die das Protokoll durch das Übertragungsrichtung-Umwandlungsmodul (715) des zweiten Teil-Unterprotokolls in ein dem zweiten Teil-Unterprotokoll entsprechendes Datenpaket umgewandelt wird, zusammenstellt;
das Datenverbindungsschichtmodul (430) ferner ein Empfangsdatenpaket-Auflösungsmodul (721) des ersten Teil-Unterprotokolls, ein Empfangsrichtung-Umwandlungsmodul (722) des ersten Teil-Unterprotokolls, ein Empfangsdatenpaket-Auflösungsmodul (723) der Interchip-Verbindung, ein Empfangsdatenpaket-Auflösungsmodul (724) des zweiten Teil-Unterprotokolls und ein Empfangsrichtung-Umwandlungsmodul (725) des zweiten Teil-Unterprotokolls umfasst;
das Empfangsdatenpaket-Auflösungsmodul (721) des ersten Teil-Unterprotokolls mindestens so konfiguriert ist, dass es ein Datenpaket parst, das sich auf das erste Teil-Unterprotokoll bezieht und vom physikalischen Schichtmodul (440) vom Peripheriegerät gemäß dem ersten Teil-Unterprotokoll des Peripherieprotokolls übertragen wurde;
das Empfangsrichtung-Umwandlungsmodul (722) des ersten Teil-Unterprotokolls mindestens so konfiguriert ist, dass es das vom Empfangsdatenpaket-Auflösungsmodul (721) des ersten Teil-Unterprotokolls geparste Datenpaket vom ersten Teil-Unterprotokoll des Peripherieprotokolls in das Systembus-Protokoll umwandelt;
das Empfangsdatenpaket-Auflösungsmodul (723) der Interchip-Verbindung mindestens so konfiguriert ist, dass es ein Datenpaket parst, das vom physikalischen Schichtmodul (440) von einem anderen Chiplet gemäß dem Interchip-Verbindungsprotokoll übertragen wurde;
das Empfangsdatenpaket-Auflösungsmodul (724) des zweiten Teil-Unterprotokolls mindestens so konfiguriert ist, dass es ein Datenpaket parst, das sich auf das zweite Teil-Unterprotokoll bezieht und vom physikalischen Schichtmodul (440) vom Peripheriegerät gemäß dem zweiten Teil-Unterprotokoll des Peripherieprotokolls übertragen wurde; und
das Empfangsrichtung-Umwandlungsmodul (725) des zweiten Teil-Unterprotokolls mindestens so konfiguriert ist, dass es das vom Empfangsdatenpaket-Auflösungsmodul (724) des zweiten Teil-Unterprotokolls geparste Datenpaket vom zweiten Teil-Unterprotokoll des Peripherieprotokolls in das Systembus-Protokoll umwandelt.

9. Protokollsteuerung (200) nach Anspruch 8, wobei das physikalische Schichtmodul (440) ein Protokollarbitrierungsmodul (811), ein physikalisches Schichtcodierungsmodul (813) und ein physikalisches Schichtdecodierungsmodul (814) umfasst;
das Protokollarbitrierungsmodul (811) mindestens so konfiguriert ist, dass es die Arbitrierung von Datenpaketen an dem Datenpaket durchführt, das vom Übertragungsdatenpaket-Zusammenstellungsmodul (712) des ersten Teil-Unterprotokolls und Übertragungsdatenpaket-Zusammenstellungsmodul (716) des zweiten Teil-Unterprotokolls im Datenverbindungsschichtmodul (430) zusammengestellt wurde, und die arbitrierten Datenpakete an ein nächstes Modul sendet, das mit dem Protokollarbitrierungsmodul (811) verbunden ist;
das physikalische Schichtcodierungsmodul (813) mindestens so konfiguriert ist, dass es ein Datenpaket gemäß einer Protokollanforderung einer physikalischen Schicht des Chiplets codiert und sendet;
das physikalische Schichtdecodierungsmodul (814) mindestens so konfiguriert ist, dass es von der physikalischen Schicht des Chiplets empfangene Daten gemäß der Protokollanforderung der physikalischen Schicht des Chiplets decodiert, um ein Datenpaket zu erhalten, und das Datenpaket an das Datenverbindungsschichtmodul (430) überträgt;
die Protokollsteuerung (200) ferner ein übertragendes Wiederübertragungspuffermodul (812) umfasst,
wobei das übertragende Wiederübertragungspuffermodul (812) mindestens so konfiguriert ist, dass es ein an den Chiplet oder das Peripheriegerät gesendetes Datenpaket speichert, und das Datenpaket ein vom Datenverbindungsschichtmodul (430) zusammengestelltes Datenpaket ist;
als Reaktion darauf, dass das Datenpaket korrekt empfangen wurde, das korrekt empfangene Datenpaket aus dem übertragenden Wiederübertragungspuffermodul (812) gelöscht wird;
als Reaktion darauf, dass das Datenpaket nicht korrekt empfangen wurde, das nicht korrekt empfangene Datenpaket aus dem übertragenden Wiederübertragungspuffermodul (812) zur Wiederübertragung abgerufen wird;
das übertragende Wiederübertragungspuffermodul (812) in dem Datenverbindungsschichtmodul (430) oder dem physikalischen Schichtmodul (440) vorgesehen ist;
als Reaktion darauf, dass eine Version des Peripherieprotokolls eine erste Version ist, das übertragende Wiederübertragungspuffermodul (812) im Datenverbindungsschichtmodul (430) vorgesehen ist; und
als Reaktion darauf, dass die Version des Peripherieprotokolls eine zweite Version ist, das übertragende Wiederübertragungspuffermodul (812) im physikalischen Schichtmodul (440) vorgesehen ist, und die zweite Version höher ist als die erste Version.

10. Protokollsteuerung (200) nach Anspruch 9, wobei das übertragende Wiederübertragungspuffermodul (812) im Datenverbindungsschichtmodul (430) vorgesehen ist und das übertragende Wiederübertragungspuffermodul (812) ein erstes übertragendes Wiederübertragungspuffermodul (714) und ein zweites übertragendes Wiederübertragungspuffermodul (717) umfasst;
das erste übertragende Wiederübertragungspuffermodul (714) mindestens so konfiguriert ist, dass es die vom Übertragungsdatenpaket-Zusammenstellungsmodul (712) des ersten Teil-Unterprotokolls und Übertragungsdatenpaket-Zusammenstellungsmodul (713) der Interchip-Verbindung zusammengestellten Datenpakete speichert; als Reaktion darauf, dass das vom Übertragungsdatenpaket-Zusammenstellungsmodul (712) des ersten Teil-Unterprotokolls zusammengestellte Datenpaket korrekt vom Peripheriegerät empfangen wurde oder das vom Übertragungsdatenpaket-Zusammenstellungsmodul (713) der Interchip-Verbindung zusammengestellte Datenpaket korrekt von einem anderen Chiplet empfangen wurde, das korrekt empfangene Datenpaket aus dem ersten übertragenden Wiederübertragungspuffermodul (714) gelöscht wird; und als Reaktion darauf, dass das Datenpaket nicht korrekt empfangen wurde, das nicht korrekt empfangene Datenpaket aus dem ersten übertragenden Wiederübertragungspuffermodul (714) zur Wiederübertragung abgerufen wird;
das zweite übertragende Wiederübertragungspuffermodul (717) mindestens so konfiguriert ist, dass es das vom Übertragungsdatenpaket-Zusammenstellungsmodul (716) des zweiten Teil-Unterprotokolls zusammengestellte Datenpaket speichert; als Reaktion darauf, dass das vom Übertragungsdatenpaket-Zusammenstellungsmodul (716) des zweiten Teil-Unterprotokolls zusammengestellte Datenpaket korrekt vom Peripheriegerät empfangen wurde, das korrekt empfangene Datenpaket aus dem zweiten übertragenden Wiederübertragungspuffermodul (717) gelöscht wird; und als Reaktion darauf, dass das Datenpaket nicht korrekt empfangen wurde, das nicht korrekt empfangene Datenpaket aus dem zweiten übertragenden Wiederübertragungspuffermodul (717) zur Wiederübertragung abgerufen wird.

11. Protokollsteuerung (200) nach Anspruch 9, wobei als Reaktion darauf, dass das übertragende Wiederübertragungspuffermodul (812) im physikalischen Schichtmodul (440) bereitgestellt ist, das nächste Modul, das mit dem Protokollarbitrierungsmodul (811) verbunden ist, das übertragende Wiederübertragungspuffermodul (812) ist; und
als Reaktion darauf, dass das übertragende Wiederübertragungspuffermodul (812) im Datenverbindungsschichtmodul (430) bereitgestellt ist, das nächste Modul, das mit dem Protokollarbitrierungsmodul (811) verbunden ist, das physikalische Schichtcodierungsmodul (813) ist.

12. Protokollsteuerung (200) nach Anspruch 4, ferner umfassend ein Steuerregister (450) und ein Zustands- und Unterbrechungsverwaltungsmodul (460),
wobei das Steuerregister (450) so konfiguriert ist, dass es ein softwarekonfigurierbares Register implementiert, und das softwarekonfigurierbare Register mindestens eines umfasst, das aus einer Gruppe ausgewählt ist, die aus einem im Peripherieprotokoll definierten Konfigurationsregister, einem benutzerdefinierten Konfigurationsregister einer Peripherieprotokollsteuerung (200) und einem Konfigurationsregister einer Interchip-Verbindungsprotokollsteuerung (200) besteht;
das Zustands- und Unterbrechungsverwaltungsmodul (460) so konfiguriert ist, dass es ein Softwarezustandsregister und eine Unterbrechungsverwaltung implementiert, und das Softwarezustandsregister mindestens eines umfasst, das aus einer Gruppe ausgewählt ist, die aus einem im Peripherieprotokoll definierten Zustandsregister, einem benutzerdefinierten Zustandsregister der Peripherieprotokollsteuerung (200) und einem Zustandsregister der Interchip-Verbindungsprotokollsteuerung (200) besteht; und
das Zustands- und Unterbrechungsverwaltungsmodul (460) ferner so konfiguriert ist, dass es die Unterbrechungsverwaltung und die Unterbrechungsberichterstattung gemäß einer Unterbrechungskonfiguration und einem Unterbrechungszustand des Steuerregisters (450) implementiert.

13. Protokollsteuerverfahren, umfassend:
Bestimmen (S01) eines Protokolls, das derzeit von der Protokollsteuerung (200) nach einem der Ansprüche 1 bis 12 verwendet wird;
als Reaktion darauf, dass das derzeit von der Protokollsteuerung (200) verwendete Protokoll das Peripherieprotokoll ist, Ausschalten (S02) eines separat für das Interchip-Verbindungsprotokoll in der Protokollsteuerung (200) konfigurierten Moduls; und
als Reaktion darauf, dass das derzeit von der Protokollsteuerung (200) verwendete Protokoll das Interchip-Verbindungsprotokoll ist, Ausschalten (S03) eines separat für das Peripherieprotokoll in der Protokollsteuerung (200) konfigurierten Moduls.

14. Protokollsteuerverfahren nach Anspruch 13, wobei das Ausschalten des separat für das Interchip-Verbindungsprotokoll in der Protokollsteuerung konfigurierten Moduls das Ausschalten mindestens eines umfasst, das aus einer Gruppe ausgewählt ist, die aus Folgendem besteht:
einem softwarekonfigurierbaren Register, das sich auf die Interchip-Verbindung in einem Steuerregister bezieht, einem Softwarezustandsregister und einem auf die Unterbrechungsverwaltung bezogenen Modul, das sich auf die Interchip-Verbindung in einem Zustands- und Unterbrechungsverwaltungsmodul bezieht, einem Protokoll-Parsingmodul, das dem Interchip-Verbindungsprotokoll in einem Transportschichtmodul entspricht, und einem Übertragungsdatenpaket-Zusammenstellungsmodul der Interchip-Verbindung und einem Empfangsdatenpaket-Auflösungsmodul der Interchip-Verbindung in einem Datenverbindungsschichtmodul.

15. Protokollsteuerverfahren nach Anspruch 14, wobei das Ausschalten des separat für das Peripherieprotokoll in der Protokollsteuerung konfigurierten Moduls das Ausschalten mindestens eines umfasst, das aus einer Gruppe ausgewählt ist, die aus Folgendem besteht:
einem softwarekonfigurierbaren Register, das sich auf das Peripherieprotokoll im Steuerregister bezieht, einem Softwarezustandsregister und einem auf die Unterbrechungsverwaltung bezogenen Modul, das sich auf das Peripherieprotokoll im Zustands- und Unterbrechungsverwaltungsmodul bezieht, einer zweiten Busschnittstelle, die einem zweiten Teil-Unterprotokoll des Peripherieprotokolls entspricht, einem Protokoll-Parsingmodul, das dem ersten Teil-Unterprotokoll entspricht, und einem Protokoll-Parsingmodul, das dem zweiten Teil-Unterprotokoll im Transportschichtmodul entspricht, und einem Übertragungsrichtung-Umwandlungsmodul des ersten Teil-Unterprotokolls, einem Übertragungsdatenpaket-Zusammenstellungsmodul des ersten Teil-Unterprotokolls, einem Übertragungsrichtung-Umwandlungsmodul des zweiten Teil-Unterprotokolls, einem Übertragungsdatenpaket-Zusammenstellungsmodul des zweiten Teil-Unterprotokolls, einem Empfangsdatenpaket-Auflösungsmodul des ersten Teil-Unterprotokolls, einem Empfangsrichtung-Umwandlungsmodul des ersten Teil-Unterprotokolls, einem Empfangsdatenpaket-Auflösungsmodul des zweiten Teil-Unterprotokolls und einem Empfangsrichtung-Umwandlungsmodul des zweiten Teil-Unterprotokolls im Datenverbindungsschichtmodul.

16. Chiplet, umfassend die Protokollsteuerung nach einem der Ansprüche 1 bis 12.

17. Chiplet nach Anspruch 16, ferner umfassend eine mit der Protokollsteuerung verbundene physikalische Codierungsunterschicht und eine mit der physikalischen Codierungsunterschicht verbundene physikalische Schichtschnittstelle.

18. System-on-Chip, umfassend eine Vielzahl von miteinander verbundenen Chiplets, wobei die Chiplets das Chiplet nach Anspruch 16 oder 17 umfassen.

## Revendications

1. Contrôleur de protocole (200), dans lequel le contrôleur de protocole (200) est configuré pour un chiplet, et le contrôleur de protocole (200) comprend :
une première interface de bus (210) connectée à un bus système, ladite première interface de bus (210) étant configurée pour mettre en œuvre un protocole d'interconnexion inter-puces et un premier sous-protocole partiel d'un protocole périphérique, le protocole d'interconnexion inter-puces étant utilisé pour interconnecter le chiplet à un autre chiplet, et le protocole périphérique étant utilisé pour interconnecter le chiplet à un dispositif périphérique ; et
une deuxième interface de bus (220) connectée au bus système, dans laquelle la deuxième interface de bus (220) est configurée pour mettre en œuvre un deuxième sous-protocole partiel du protocole périphérique, et le premier sous-protocole partiel et le deuxième sous-protocole partiel sont configurés pour être mis en œuvre par des interfaces de bus différentes,
dans lequel le chiplet utilise soit le protocole d'interconnexion inter-puces ou soit le protocole périphérique au même instant par l'intermédiaire du contrôleur de protocole (200).

2. Contrôleur de protocole (200) selon la revendication 1, comprenant en outre un module d'interface de bus (410), dans lequel le module d'interface de bus (410) comprend un premier module de gestion d'interface (411) et un deuxième module de gestion d'interface (412) ;
le premier module de gestion d'interface (411) est configuré pour gérer la connexion entre la première interface de bus (210) et le bus système ; et
le deuxième module de gestion d'interface (412) est configuré pour gérer la connexion entre la deuxième interface de bus (220) et le bus système.

3. Contrôleur de protocole (200) selon la revendication 2, dans lequel le premier module de gestion d'interface (411) configuré pour gérer la connexion entre la première interface de bus (210) et le bus système comprend :
la gestion de la connexion et de la déconnexion entre la première interface de bus (210) et le bus système en fonction d'états internes du contrôleur de protocole (200) relatifs au protocole d'interconnexion inter-puces et au premier sous-protocole partiel, ainsi que d'un état de la première interface de bus (210) ;
le deuxième module de gestion d'interface (412) configuré pour gérer la connexion entre la deuxième interface de bus (220) et le bus système comprend :
la gestion de la connexion et de la déconnexion entre la deuxième interface de bus (220) et le bus système en fonction d'un état interne du contrôleur de protocole (200) concernant le deuxième sous-protocole partiel et d'un état de la deuxième interface de bus (220) ;
le premier module de gestion d'interface (411) configuré pour gérer la connexion et la déconnexion entre la première interface de bus (210) et le bus système en fonction de l'état interne du contrôleur de protocole (200) concernant le protocole d'interconnexion inter-puces et le premier sous-protocole partiel, ainsi que de l'état de la première interface de bus (210), comprend :
en réponse au fait que des états de traitement de modules internes du contrôleur de protocole (200) relatifs au protocole d'interconnexion inter-puces et au premier sous-protocole partiel sont tous des états inactifs et que la première interface de bus (210) est également dans un état inactif, déconnecter la connexion entre la première interface de bus (210) et le bus système ; et
en réponse au fait qu'un module interne quelconque du contrôleur de protocole (200) effectue une opération de traitement de données relative au protocole d'interconnexion inter-puces ou au premier sous-protocole partiel, rétablir la connexion entre la première interface de bus (210) et le bus système ; et
le deuxième module de gestion d'interface (412) configuré pour gérer la connexion et la déconnexion entre la deuxième interface de bus (220) et le bus système en fonction de l'état interne du contrôleur de protocole (200) concernant le deuxième sous-protocole partiel et de l'état de la deuxième interface de bus (220) comprend :
en réponse au fait que des états de traitement de modules internes du contrôleur de protocole (200) relatifs au deuxième sous-protocole partiel sont tous des états inactifs et que la deuxième interface de bus (220) est également dans un état inactif, déconnecter la connexion entre la deuxième interface de bus (220) et le bus système ; et
en réponse au fait qu'un module interne quelconque du contrôleur de protocole (200) effectue une opération de traitement de données relative au deuxième sous-protocole partiel, rétablir la connexion entre la deuxième interface de bus (220) et le bus système.

4. Contrôleur de protocole (200) selon la revendication 1, comprenant en outre un module de couche de transport (420), un module de couche de liaison de données (430) et un module de couche physique (440),
dans lequel une interface de couche de transport du module de couche de transport (420) est connectée au bus système séparément par l'intermédiaire de la première interface de bus (210) et de la deuxième interface de bus (220) ; le module de couche de transport (420) est connecté au module de couche de liaison de données (430), et le module de couche de liaison de données (430) est connecté au module de couche physique (440) ; et le module de couche physique (440) est connecté à une sous-couche de codage physique du chiplet par l'intermédiaire d'une troisième interface de bus du contrôleur de protocole (200).

5. Contrôleur de protocole (200) selon la revendication 4, dans lequel le module de couche de transport (420) est muni d'un premier sous-module de couche de transport (601) et d'un deuxième sous-module de couche de transport (602), le premier sous-module de couche de transport (601) est configuré pour mettre en œuvre le contrôle de la transmission de données du protocole d'interconnexion inter-puces et du premier sous-protocole partiel, et le deuxième sous-module de couche de transport (602) est configuré pour mettre en œuvre le contrôle de la transmission de données du deuxième sous-protocole partiel ;
le module de couche de transport (420) comprend une pluralité de sous-modules partagés par le premier sous-module de couche de transport (601) et le deuxième sous-module de couche de transport (602), et la pluralité de sous-modules fait partie de sous-modules au sein du module de couche de transport (420) ; et
la pluralité de sous-modules comprend au moins :
un premier ensemble de sous-modules de la couche de transport, configuré pour traiter une requête provenant d'un périphérique ou d'un autre chiplet qui doit être envoyée au bus système, et une réponse provenant du bus système qui doit être envoyée à un périphérique ou à un autre chiplet ; et
un deuxième ensemble de sous-modules de la couche de transport, configuré pour traiter une requête provenant du bus système qui doit être envoyée à un périphérique ou à un autre chiplet, et une réponse provenant d'un périphérique ou d'un autre chiplet qui doit être envoyée au bus système.

6. Contrôleur de protocole (200) selon la revendication 5, dans lequel le premier ensemble de sous-modules de la couche de transport comprend au moins une file d'attente de requêtes à transmettre (421) et une file d'attente de réponses à recevoir (422) ;
la file d'attente de requêtes à transmettre (421) est configurée au moins pour stocker une requête à envoyer par le chiplet, ladite requête provenant d'un périphérique connecté au chiplet ou à un autre chiplet et devant être envoyée au bus système ;
la file d'attente de réponses à recevoir (422) est configurée au moins pour stocker une réponse à recevoir, marquée de manière correspondante pour une requête à envoyer qui a été placée dans la file d'attente de requêtes à transmettre (421), et pour stocker une première réponse du bus système, et une requête à laquelle la première réponse stockée est adressée correspond à la requête à envoyer à laquelle la réponse à recevoir stockée dans la file d'attente de réponses à recevoir (422) est adressée ;
lorsqu'une condition de transmission de données vers le bus système est remplie, la requête à envoyer est retirée de la file d'attente des requêtes à transmettre (421) et supprimée de celle-ci, et la requête à envoyer ainsi que les données correspondant à cette requête sont envoyées vers le bus système ;
lorsqu'une condition de transmission de données vers une couche de liaison de données est remplie, la première réponse est retirée de la file d'attente de réponses à recevoir (422) et supprimée de celle-ci, et la première réponse ainsi que les données correspondant à celle-ci sont envoyées au module de couche de liaison de données (430) ;
l'ensemble de sous-modules de la couche de transport comprend au moins une file d'attente de requêtes de réception (423) et une file d'attente de réponses d'émission (424) ;
la file d'attente de requêtes de réception (423) est configurée au moins pour stocker une requête de réception du chiplet, et la requête de réception provient du bus système et doit être envoyée au périphérique connecté au chiplet ou à un autre chiplet ;
la file d'attente de réponses à transmettre (424) est configurée au moins pour stocker une réponse à recevoir, marquée de manière correspondante pour une requête de réception qui a été envoyée, ainsi qu'une deuxième réponse provenant du périphérique ou d'un autre chiplet, et une requête à laquelle la deuxième réponse stockée est adressée correspond à la requête de réception à laquelle la réponse à recevoir stockée dans la file d'attente de réponses à transmettre (424) est adressée ;
lorsque la condition de transmission de données vers la couche de liaison de données est remplie, la requête de réception est retirée de la file d'attente des requêtes de réception (423) et supprimée de celle-ci, et la requête de réception ainsi que les données correspondant à cette requête sont envoyées au module de la couche de liaison de données (430) ;
lorsque la condition de transmission de données vers le bus système est remplie, la deuxième réponse est retirée de la file d'attente des réponses de transmission (424) et supprimée de celle-ci, et la deuxième réponse ainsi que les données correspondant à celle-ci sont envoyées vers le bus système ;
la pluralité de sous-modules comprend en outre un tampon de données d'émission (425), un tampon de données de réception (426) et un module de planification de file d'attente (427) ;
le tampon de données d'émission (425) est configuré au moins pour stocker les données correspondant à la requête à envoyer dans la file d'attente des requêtes d'émission (421) et pour stocker les données correspondant à la deuxième réponse dans la file d'attente des réponses d'émission (424) ;
le tampon de données de réception (426) est configuré au moins pour stocker les données correspondant à la requête de réception dans la file d'attente des requêtes de réception (423) et pour stocker les données correspondant à la première réponse dans la file d'attente des réponses de réception (422) ; et
le module de planification des files d'attente (427) est configuré au moins pour arbitrer et planifier les opérations d'insertion en file d'attente et de retrait de la file d'attente de la requête à envoyer dans la file d'attente des requêtes à transmettre (421), de la première réponse dans la file d'attente des réponses reçues (422), la requête de réception dans la file d'attente des requêtes de réception (423), et la deuxième réponse dans la file d'attente des réponses d'émission (424), et un mécanisme d'arbitrage et de planification du module de planification des files d'attente (427) est configuré et défini par un registre de configuration.

7. Contrôleur de protocole (200) selon la revendication 5 ou 6, dans lequel le module de couche de transport (420) est muni d'une pluralité de modules d'analyse de protocole (428), et le nombre total de la pluralité de modules d'analyse de protocole (428) correspond au nombre total de protocoles nécessitant une configuration indépendante des modules d'analyse de protocole (428) ;
la pluralité de modules d'analyse de protocole (428) comprend un module d'analyse de protocole correspondant au protocole d'interconnexion inter-puces, un module d'analyse de protocole correspondant au premier sous-protocole partiel, et un module d'analyse de protocole correspondant au deuxième sous-protocole partiel ; et
le module d'analyse de protocole correspondant au protocole d'interconnexion inter-puces et le module d'analyse de protocole correspondant au premier sous-protocole partiel sont prévus dans le premier sous-module de couche de transport (601), et le module d'analyse de protocole correspondant au deuxième sous-protocole partiel est prévu dans le deuxième sous-module de couche de transport (602).

8. Contrôleur de protocole (200) selon la revendication 4, dans lequel le module de couche de liaison de données (430) comprend un module de conversion de premier sous-protocole partiel dans le sens de transmission (711), un premier module d'assemblage de paquets de données de sous-protocole partiel de transmission (712), un module d'assemblage de paquets de données d'interconnexion inter-puces (713), un module de conversion de protocole du deuxième sous- e partiel de transmission (715), et un deuxième module d'assemblage de paquets de données de sous-protocole partiel de transmission (716) ;
le premier module de conversion de sous-protocole partiel dans le sens de transmission (711) est configuré au moins pour convertir une requête ou une réponse et/ou des données transmises par le module de couche de transport (420) d'un protocole de bus système vers le premier sous-protocole partiel du protocole périphérique ;
le module d'assemblage de paquets de données de transmission du premier sous-protocole partiel (712) est configuré au moins pour assembler la requête ou la réponse et/ou les données dont le protocole a été converti par le module de conversion du premier sous-protocole partiel dans le sens de la transmission (711) en un paquet de données conforme au premier sous-protocole partiel ;
le module d'assemblage de paquets de données de transmission de l'interconnexion inter-puces (713) est configuré au moins pour assembler la requête ou la réponse et/ou les données transmises par le module de couche de transport (420) en un paquet de données conforme au protocole d'interconnexion inter-puces, conformément audit protocole d'interconnexion inter-puces ;
le module de conversion de sous-protocole partiel de deuxième niveau dans le sens de transmission (715) est configuré au moins pour convertir la requête ou la réponse et/ou les données transmises par le module de couche de transport (420) du protocole de bus système vers le deuxième sous-protocole partiel du protocole périphérique ;
le module d'assemblage de paquets de données du deuxième sous-protocole partiel (716) est configuré au moins pour assembler la requête ou la réponse et/ou les données dont le protocole a été converti par le module de conversion du deuxième sous-protocole partiel dans le sens de transmission (715) en un paquet de données conforme au deuxième sous-protocole partiel ;
le module de couche de liaison de données (430) comprend en outre un module de désassemblage de paquets de données de réception du premier sous-protocole partiel (721), un module de conversion de premier sous-protocole partiel en sens de réception (722), un module de désassemblage de paquets de données de réception d'interconnexion inter-puces (723), un module de désassemblage de paquets de données de réception de deuxième sous-protocole partiel (724), et un module de conversion de deuxième sous-protocole partiel en sens de réception (725) ;
le premier module de désassemblage de paquets de données de réception du sous-protocole partiel (721) est configuré au moins pour analyser un paquet de données lié au premier sous-protocole partiel transmis par le module de couche physique (440) depuis le périphérique, conformément au premier sous-protocole partiel du protocole du périphérique ;
le module de conversion de sous-protocole partiel de direction de réception (722) est configuré au moins pour convertir le paquet de données analysé par le module de désassemblage de paquets de données de réception de sous-protocole partiel (721), du premier sous-protocole partiel du protocole périphérique vers le protocole de bus système ;
le module de désassemblage de paquets de données de réception de l'interconnexion inter-puces (723) est configuré au moins pour analyser un paquet de données transmis par le module de couche physique (440) depuis un autre chiplet conformément au protocole d'interconnexion inter-puces ;
le module de désassemblage de paquets de données de réception du deuxième sous-protocole partiel (724) est configuré au moins pour analyser un paquet de données lié au deuxième sous-protocole partiel, transmis par le module de couche physique (440) depuis le périphérique, conformément au deuxième sous-protocole partiel du protocole périphérique ; et
le module de conversion du deuxième sous-protocole partiel dans le sens de la réception (725) est configuré au moins pour convertir le paquet de données analysé par le module de désassemblage de paquets de données de réception du deuxième sous-protocole partiel (724), du deuxième sous-protocole partiel du protocole du périphérique vers le protocole du bus système.

9. Contrôleur de protocole (200) selon la revendication 8, dans lequel le module de couche physique (440) comprend un module d'arbitrage de protocole (811), un module de codage de couche physique (813) et un module de décodage de couche physique (814) ;
le module d'arbitrage de protocole (811) est configuré au moins pour effectuer un arbitrage de paquets de données sur le paquet de données assemblé par le premier module d'assemblage de paquets de données de sous-protocole partiel de transmission (712) et sur le paquet de données assemblé par le deuxième module d'assemblage de paquets de données de sous-protocole partiel de transmission (716) dans le module de couche de liaison de données (430), et à envoyer les paquets de données arbitrés à un module suivant connecté au module d'arbitrage de protocole (811) ;
le module de codage de la couche physique (813) est configuré au moins pour coder et envoyer un paquet de données conformément à une exigence de protocole d'une couche physique du chiplet ;
le module de décodage de la couche physique (814) est configuré au moins pour décoder les données reçues de la couche physique du chiplet conformément à l'exigence de protocole de la couche physique du chiplet afin d'obtenir un paquet de données, et pour transmettre ce paquet de données au module de la couche liaison de données (430) ;
le contrôleur de protocole (200) comprend en outre un module de tampon de retransmission d'émission (812),
dans lequel le module de tampon de retransmission d'émission (812) est configuré au moins pour stocker un paquet de données envoyé au chiplet ou au périphérique, et ledit paquet de données est un paquet de données assemblé par le module de couche de liaison de données (430) ;
en réponse à la réception correcte du paquet de données, le paquet de données correctement reçu est supprimé du module de tampon de retransmission d'émission (812) ;
en réponse à la non-réception correcte du paquet de données, le paquet de données mal reçu est récupéré à partir du module de tampon de retransmission d'émission (812) en vue d'une retransmission ;
le module de tampon de retransmission d'émission (812) est prévu dans le module de couche de liaison de données (430) ou dans le module de couche physique (440) ;
lorsqu'une version du protocole périphérique est une première version, le module de tampon de retransmission d'émission (812) est prévu dans le module de couche de liaison de données (430) ; et
lorsque la version du protocole périphérique est une deuxième version, le module de tampon de retransmission d'émission (812) est prévu dans le module de couche physique (440), et la deuxième version est supérieure à la première version.

10. Contrôleur de protocole (200) selon la revendication 9, dans lequel le module de tampon de retransmission d'émission (812) est prévu dans le module de couche de liaison de données (430), et le module de tampon de retransmission d'émission (812) comprend un premier module de tampon de retransmission d'émission (714) et un deuxième module de tampon de retransmission d'émission (717) ;
le premier module de tampon de retransmission d'émission (714) est configuré au moins pour stocker les paquets de données assemblés par le premier module d'assemblage de paquets de données d'émission de sous-protocole partiel (712) et le module d'assemblage de paquets de données d'émission d'interconnexion inter-puces (713) ; lorsque le paquet de données assemblé par le premier module d'assemblage de paquets de données de transmission de sous-protocole partiel (712) est reçu correctement par le périphérique, ou lorsque le paquet de données assemblé par le module d'assemblage de paquets de données de transmission d'interconnexion inter-puces (713) est reçu correctement par un autre chiplet, le paquet de données correctement reçu est supprimé du premier module de tampon de retransmission de transmission (714) ; et lorsque le paquet de données n'est pas reçu correctement, le paquet de données mal reçu est récupéré à partir du premier module tampon de retransmission d'émission (714) en vue d'une retransmission ;
le deuxième module tampon de retransmission d'émission (717) est configuré au moins pour stocker le paquet de données assemblé par le deuxième module d' d'assemblage de paquets de données de sous-protocole partiel (716) ; en réponse à la réception correcte par le périphérique du paquet de données assemblé par le deuxième module d'assemblage de paquets de données de transmission de sous-protocole partiel (716), le paquet de données correctement reçu est supprimé du deuxième module tampon de retransmission d'émission (717) ; et en réponse à la non-réception correcte du paquet de données, le paquet de données mal reçu est récupéré à partir du deuxième module tampon de retransmission d'émission (717) en vue d'une retransmission.

11. Contrôleur de protocole (200) selon la revendication 9, dans lequel, lorsque le module de tampon de retransmission d'émission (812) est prévu dans le module de couche physique (440), le module suivant connecté au module d'arbitrage de protocole (811) est le module de tampon de retransmission d'émission (812) ; et
en réponse à la présence du module de tampon de retransmission d'émission (812) dans le module de couche liaison de données (430), le module suivant connecté au module d'arbitrage de protocole (811) est le module de codage de couche physique (813).

12. Contrôleur de protocole (200) selon la revendication 4, comprenant en outre un registre de contrôle (450) et un module de gestion d'état et d'interruption (460),
dans lequel le registre de commande (450) est configuré pour mettre en œuvre un registre configurable par logiciel, et le registre configurable par logiciel comprend au moins un élément choisi parmi un groupe constitué d'un registre de configuration défini dans le protocole périphérique, d'un registre de configuration personnalisé d'un contrôleur de protocole périphérique (200) et d'un registre de configuration d'un contrôleur de protocole d'interconnexion inter-puces (200) ;
le module de gestion d'état et d'interruptions (460) est configuré pour mettre en œuvre un registre d'état logiciel et une gestion des interruptions, et le registre d'état logiciel comprend au moins un élément choisi parmi un groupe comprenant un registre d'état défini dans le protocole périphérique, un registre d'état personnalisé du contrôleur de protocole périphérique (200) et un registre d'état du contrôleur de protocole d'interconnexion inter-puces (200) ; et
le module de gestion d'état et d'interruption (460) est en outre configuré pour mettre en œuvre la gestion des interruptions et la notification des interruptions conformément à une configuration d'interruption et à un état d'interruption du registre de contrôle (450).

13. Procédé de contrôle de protocole, comprenant :
la détermination (S01) d'un protocole actuellement utilisé par le contrôleur de protocole (200) selon l'une quelconque des revendications 1 à 12 ;
en réponse au fait que le protocole actuellement utilisé par le contrôleur de protocole (200) est le protocole périphérique, la désactivation (S02) d'un module configuré séparément pour le protocole d'interconnexion inter-puces dans le contrôleur de protocole (200) ; et
en réponse au fait que le protocole actuellement utilisé par le contrôleur de protocole (200) est le protocole d'interconnexion inter-puces, la désactivation (S03) d'un module configuré séparément pour le protocole périphérique dans le contrôleur de protocole (200).

14. Procédé de contrôle de protocole selon la revendication 13, dans lequel la désactivation du module configuré séparément pour le protocole d'interconnexion inter-puces dans le contrôleur de protocole comprend la désactivation d'au moins un élément choisi parmi un groupe comprenant :
un registre configurable par logiciel lié à l'interconnexion inter-puces dans un registre de contrôle, un registre d'état logiciel et un module lié à la gestion des interruptions et à l'interconnexion inter-puces dans un module de gestion d'état et d'interruptions, un module d'analyse de protocole correspondant au protocole d'interconnexion inter-puces dans un module de couche de transport, ainsi qu'un module d'assemblage de paquets de données de transmission pour l'interconnexion inter-puces et un module de désassemblage de paquets de données de réception pour l'interconnexion inter-puces dans un module de couche de liaison de données.

15. Procédé de contrôle de protocole selon la revendication 14, dans lequel la désactivation du module configuré séparément pour le protocole périphérique dans le contrôleur de protocole comprend la désactivation d'au moins un élément choisi parmi un groupe comprenant :
un registre configurable par logiciel lié au protocole périphérique dans le registre de contrôle, un registre d'état logiciel et un module lié à la gestion des interruptions et au protocole périphérique dans le module de gestion d'état et d'interruptions, une deuxième interface de bus correspondant à un deuxième sous-protocole partiel du protocole périphérique, un module d'analyse de protocole correspondant au premier sous-protocole partiel et un module d'analyse de protocole correspondant au deuxième sous-protocole partiel dans le module de la couche de transport, ainsi qu'un module de conversion du premier sous-protocole partiel dans le sens de la transmission, un module d'assemblage de paquets de données du premier sous-protocole partiel dans le sens de la transmission, un module de conversion du deuxième sous-protocole partiel dans le sens de la transmission, un module d'assemblage de paquets de données du deuxième sous- e partiel dans le sens de la transmission, un module de désassemblage de paquets de données du premier sous-protocole partiel dans le sens de la réception, un module de conversion de premier sous-protocole partiel dans le sens de la réception, un module de désassemblage de paquets de données de deuxième sous-protocole partiel dans le sens de la réception, et un module de conversion de deuxième sous-protocole partiel dans le sens de la réception dans le module de la couche liaison de données.

16. Chiplet, comprenant le contrôleur de protocole selon l'une quelconque des revendications 1 à 12.

17. Le chiplet selon la revendication 16, comprenant en outre une sous-couche de codage physique reliée au contrôleur de protocole, et une interface de couche physique reliée à la sous-couche de codage physique.

18. Système sur puce, comprenant une pluralité de chiplets interconnectés, dans lequel les chiplets comprennent le chiplet selon la revendication 16 ou 17.
